(19) **Europäisches Patentamt European Patent Office Office européen des brevets**

(11) **EP 4 238 342 B1**

(12) **EUROPEAN PATENT SPECIFICATION**

(45) Date of publication and mention of the grant of the patent:
**03.12.2025 Bulletin 2025/49**

(21) Application number: **20959981.0**

(22) Date of filing: **30.10.2020**

(51) International Patent Classification (IPC):
$H04W\ 76/15^{(2018.01)}$    $H04L\ 5/00^{(2006.01)}$
$H04L\ 5/14^{(2006.01)}$    $H04W\ 8/22^{(2009.01)}$
$H04W\ 36/00^{(2009.01)}$    $H04W\ 72/0453^{(2023.01)}$
$H04W\ 72/20^{(2023.01)}$    $H04W\ 92/20^{(2009.01)}$

(52) Cooperative Patent Classification (CPC):
**H04L 5/001; H04L 5/0007; H04L 5/0091; H04W 72/0453; H04W 76/15;** H04L 5/1469; H04W 8/22; H04W 36/00692; H04W 72/20; H04W 92/20; Y02D 30/70

(86) International application number:
**PCT/KR2020/015016**

(87) International publication number:
**WO 2022/092364 (05.05.2022 Gazette 2022/18)**

(54) **METHOD AND APPARATUS FOR DUAL CONNECTIVITY**

VERFAHREN UND VORRICHTUNG FÜR DUALE KONNEKTIVITÄT

PROCÉDÉ ET APPAREIL POUR CONNECTIVITÉ DOUBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.09.2023 Bulletin 2023/36**

(73) Proprietor: **Telefonaktiebolaget LM Ericsson (publ)**
**164 83 Stockholm (SE)**

(72) Inventors:
 • **JANG, Jae Won**
  Seoul 08503 (KR)
 • **PARK, Ji Hong**
  Seoul 08503 (KR)
 • **HAN, Sang Wook**
  Seoul 08503 (KR)
 • **LIM, Young Woong**
  Seoul 08503 (KR)
 • **YANG, Hyun**
  Seoul 08503 (KR)

(74) Representative: **Ericsson Patent Development Torshamnsgatan 21-23 164 80 Stockholm (SE)**

(56) References cited:
WO-A1-2020/034568    WO-A1-2020/151735
US-A1- 2019 246 286    US-A1- 2019 246 286

 • **NOKIA (EMAIL DISCUSSION RAPPORTEUR): "Summary of email discussion [99#27][NR] Capability coordination - Part 3", vol. RAN WG2, no. Prague, Czech Republic; 20171013, 8 October 2017 (2017-10-08), XP051342885, Retrieved from the Internet <URL:http:// www.3gpp.org/ftp/Meetings_3GPP_SYNC/RAN2/ Docs/> [retrieved on 20171008]**
 • **SAMSUNG: "Coordination of band combinations in IRAT DC", vol. RAN WG2, no. Reno, USA; 20161114 - 20161118, 4 November 2016 (2016-11-04), XP051192594, Retrieved from the Internet <URL:http://www.3gpp.org/ftp/tsg_ran/ WG2_RL2/TSGR2_96/Docs/> [retrieved on 20161104]**

- "3rd Generation Partnership Project; Technical Specification Group Radio Access Network; Evolved Universal Terrestrial Radio Access (E-UTRA) and NR; Multi-connectivity; Stage 2 (Release 16)", 2 October 2020 (2020-10-02), XP052353443, Retrieved from the Internet <URL:https://ftp.3gpp.org/tsg_ran/WG2_RL2/Specifications/202009_final_specs_after_RAN_89/37340-g30.zip 37340-g30.docx> [retrieved on 20201002]
- HUAWEI, CHINA UNICOM: "Discussions on potential RAN3 impacts about the QoE measurement configuration, reporting and releasing under SA, NSA and MR-DC operation", 3GPP DRAFT; R3-206734, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. 20201102 - 20201112, 23 October 2020 (2020-10-23), Mobile Competence Centre ; 650, route des Lucioles ; F-06921 Sophia-Antipolis Cedex ; France , XP051946081
- HUAWEI (MODERATOR): "Summary of Offline Discussion on CB: # 1014_SONMDT_MDTMR-DC", 3GPP DRAFT; R3-205741, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Electronic Meeting ;20200817 - 20200828, 2 September 2020 (2020-09-02), Mobile Competence Centre ; 650, route des Lucioles ; F-06921 Sophia-Antipolis Cedex ; France , XP051928448

**Description**

[Technical Field]

The present disclosure generally relates to communication networks, and more specifically, to a method and apparatus for dual connectivity.

[Background Art]

This section introduces aspects that may facilitate a better understanding of the disclosure. Accordingly, the statements of this section are to be read in this light and are not to be understood as admissions about what is in the prior art or what is not in the prior art.

Communication service providers and network operators have been continually facing challenges to deliver value and convenience to consumers by, for example, providing compelling network services and performance. With the rapid development of networking and communication technologies, wireless communication networks such as long-term evolution (LTE)/fourth generation (4G) network and new radio (NR)/fifth generation (5G) network are expected to achieve high traffic capacity and energy efficiency. In order to meet the diverse requirements of new services across a wide variety of industries, the 3rd generation partnership project (3GPP) is developing various networking technologies and communication types. As an example, wireless communication networks may support a dual connectivity (DC) operation of a terminal device such as user equipment (UE). The terminal device may be configured to utilize radio resources provided by two distinct schedulers, for example, deployed in a radio node in site, or located in different network nodes connected via an interface cross two communication networks. Considering the diversity of device capabilities and application scenarios, DC configuration and implementation may become more challenging.

The documents 3GPP contributions R2-1710860, R2-1678870. 3GPP TS 37.340,V16.3.0, US 2019246286A1 are prior arts.

[Disclosure]

[Technical Problem]

The present disclosure generally relates to communication networks, and more specifically, to a method and apparatus for dual connectivity.

[Technical Solution]

This summary is provided to introduce a selection of concepts in a simplified form that are further described below in the detailed description. This summary is not intended to identify key features or essential features of the claimed subject matter, nor is it intended to be used to limit the scope of the claimed subject matter.

Multi-radio dual connectivity (MR-DC) may be a generalization of the intra-evolved universal mobile telecommunication system (UMTS) terrestrial radio access (Intra-E-UTRA) DC, e.g. as described in 3GPP TS 36.300 V16.3.0, where the entire content of this technical specification is incorporated into the present disclosure by reference. For MR-DC, a multiple transmitting/receiving (Rx/Tx) capable UE may be configured to utilize resources provided by two different nodes connected via non-ideal backhaul, one providing NR access and the other one providing either E-UTRA or NR access (e.g., as specified in section 4.1 of 3GPP TS 37.340 V16.3.0, where the entire content of this technical specification is incorporated into the present disclosure by reference). One node may act as the master mode (MN) and the other as the secondary node (SN). The MN and the SN may be connected via a network interface and at least the MN is connected to the core network. In the case that the MN and the SN can support carrier aggregation (CA), MR-DC band combination selection may be performed respectively in both MN and SN for the MR-DC CA configuration. According to the existing solutions of MR-DC CA configuration, the MR-DC band combination selection is either MN preferred or SN preferred CA configuration in MR-DC, which may not be able to achieve the maximum MR-DC CA throughput. Therefore, it may be desirable to implement MR-DC CA configuration in a more efficient way.

Various exemplary embodiments of the present disclosure propose a solution for DC, which may optimize MR-DC CA configuration, e.g., by signaling additional information (e.g., achievable total throughput, etc.) for selection of a band combination (BC) and the associated feature set (FS) in MR-DC band combination coordination between an MN and an SN, so that the efficiency of network operation can be improved with maximized MR-DC CA throughput.

The inventions is set out in the appended claims.

According to a first aspect of the present disclosure, there is provided a method performed by a first network node (e.g., a base station, etc.). The method comprises determining a first configuration for dual connectivity of a terminal device supported by the first network node and a first performance evaluation of the first configuration. In accordance with an exemplary embodiment, the method further comprises transmitting a first message to a second network node. The first message may indicate the first configuration and the first performance evaluation.

In accordance with an exemplary embodiment, the first configuration may include one or more CA configurations supported by the first network node.

In accordance with an exemplary embodiment, the first performance evaluation may include one or more throughput evaluations for one or more CA configurations supported by the first network node.

In accordance with an exemplary embodiment, the first configuration may indicate at least one of:

- one or more band combinations allowed for the dual connectivity of the terminal device by the first network node; and
- one or more feature sets associated with the one or more band combinations.

In accordance with an exemplary embodiment, the first performance evaluation may indicate CA throughput evaluated for each of the one or more band combinations and the associated one or more feature sets.

In accordance with an exemplary embodiment, the CA throughput evaluated for each of the one or more band combinations and the associated one or more feature sets may be the highest throughput evaluated for CA configurations corresponding to each of the one or more band combinations and the associated one or more feature sets.

In accordance with an exemplary embodiment, the method according to the first aspect of the present disclosure may further comprise: receiving a second message from the second network node. The second message may indicate a second configuration for the dual connectivity of the terminal device and a second performance evaluation of the second configuration. The second configuration may be determined by the second network node based at least in part on the first configuration.

In accordance with an exemplary embodiment, the second configuration may include: a first CA configuration selected from one or more CA configurations supported by the first network node; and a second CA configuration selected from one or more CA configurations supported by the second network node.

In accordance with an exemplary embodiment, the one or more CA configurations supported by the second network node may be associated with the one or more CA configurations supported by the first network node.

In accordance with an exemplary embodiment, the second performance evaluation may include a total throughput evaluation associated with a first throughput evaluation and a second throughput evaluation. The first throughput evaluation may be for a first CA configuration supported by the first network node. The second throughput evaluation may be for a second CA configuration supported by the second network node.

In accordance with an exemplary embodiment, the second configuration may indicate at least one of:

- a band combination selected from one or more band combinations which are allowed for the dual connectivity of the terminal device by both the first network node and the second network node; and
- a feature set associated with the selected band combination.

In accordance with an exemplary embodiment, the second performance evaluation may indicate total CA throughput associated with a first CA throughput and a second CA throughput. The first CA throughput may be evaluated by the first network node for the selected band combination and the associated feature set. The second CA throughput may be evaluated by the second network node for the selected band combination and the associated feature set.

In accordance with an exemplary embodiment, the selected band combination and the associated feature set may have the highest total CA throughput, among the one or more band combinations and associated feature sets which are allowed for the dual connectivity of the terminal device by both the first network node and the second network node.

In accordance with an exemplary embodiment, the method according to the first aspect of the present disclosure may further comprise: determining whether to set up the dual connectivity of the terminal device, according to the second message.

In accordance with an exemplary embodiment, the method according to the first aspect of the present disclosure may further comprise: determining a third performance evaluation with the dual connectivity of the terminal device being inactive.

In accordance with an exemplary embodiment, the method according to the first aspect of the present disclosure may further comprise: comparing the second performance evaluation with the third performance evaluation.

In accordance with an exemplary embodiment, the third performance evaluation may include a throughput evaluation of a current configuration for the terminal device by the first network node.

In accordance with an exemplary embodiment, the first network node may determine to set up the dual connectivity of the terminal device, when a result of the comparison meets a predetermined criterion.

In accordance with an exemplary embodiment, the method according to the first aspect of the present disclosure may further comprise: setting up the dual connectivity of the terminal device according to the second configuration, when determining to set up the dual connectivity of the terminal device.

In accordance with an exemplary embodiment, the first network node may be configured to be a master node of the terminal device, and the second network node may be configured to be a secondary node of the terminal device.

In accordance with an exemplary embodiment, the first message may be:

- an addition request message for a secondary node of the terminal device; or
- a modification request message for the secondary node of the terminal device.

In accordance with an exemplary embodiment, the second message may be:

- an addition request acknowledge message for a secondary node of the terminal device;
- a modification request acknowledge message for the secondary node of the terminal device; or
- a modification required message for the secondary node of the terminal device.

According to a second aspect of the present disclosure, there is provided an apparatus which may be implemented as a first network node. The apparatus may comprise one or more processors and one or more memories storing computer program codes. The one or more memories and the computer program codes may be configured to, with the one or more processors, cause the apparatus at least to perform any step of the method according to the first aspect of the present disclosure.

According to a third aspect of the present disclosure, there is provided a computer-readable medium having computer program codes embodied thereon which, when executed on a computer, cause the computer to perform any step of the method according to the first aspect of the present disclosure.

According to a fourth aspect of the present disclosure, there is provided an apparatus which may be implemented as a first network node. The apparatus may comprise a determining unit and a transmitting unit. In accordance with some exemplary embodiments, the determining unit may be operable to carry out at least the determining step of the method according to the first aspect of the present disclosure. The transmitting unit may be operable to carry out at least the transmitting step of the method according to the first aspect of the present disclosure.

According to a fifth aspect of the present disclosure, there is provided a method performed by a second network node (e.g., a base station, etc.). The method comprises receiving a first message from a first network node. The first message may indicate a first configuration for dual connectivity of a terminal device supported by the first network node and a first performance evaluation of the first configuration. In accordance with an exemplary embodiment, the method further comprises determining a second configuration for the dual connectivity of the terminal device and a second performance evaluation of the second configuration. The second configuration may be determined by the second network node based at least in part on the first configuration.

In accordance with an exemplary embodiment, the first message received by the second network node according to the fifth aspect of the present disclosure may correspond to the first message transmitted by the first network node according to the first aspect of the present disclosure. Thus, the first message according to the first and fifth aspects of the present disclosure may have the same or similar contents and/or feature elements.

Similarly, the first configuration according to the first and fifth aspects of the present disclosure may have the same or similar contents and/or feature elements, and the first performance evaluation according to the first and fifth aspects of the present disclosure may have the same or similar contents and/or feature elements.

In accordance with an exemplary embodiment, the method according to the fifth aspect of the present disclosure may further comprise: transmitting a second message to the first network node. The second message may indicate the second configuration for the dual connectivity of the terminal device and the second performance evaluation of the second configuration.

In accordance with an exemplary embodiment, the second message transmitted by the second network node according to the fifth aspect of the present disclosure may correspond to the second message received by the first network node according to the first aspect of the present disclosure. Thus, the second message according to the first and fifth aspects of the present disclosure may have the same or similar contents and/or feature elements.

Similarly, the second configuration according to the first and fifth aspects of the present disclosure may have the same or similar contents and/or feature elements, and the second performance evaluation according to the first and fifth aspects of the present disclosure may have the same or similar contents and/or feature elements.

In accordance with an exemplary embodiment, the method according to the fifth aspect of the present disclosure may further comprise: setting up the dual connectivity of the terminal device according to the second configuration, when the first network node determines to set up the dual connectivity of the terminal device according to the second message.

According to a sixth aspect of the present disclosure, there is provided an apparatus which may be implemented as a second network node. The apparatus may comprise one or more processors and one or more memories storing computer program codes. The one or more memories and the computer program codes may be configured to, with the one or more processors, cause the apparatus at least to perform any step of the method according to the fifth aspect of the present disclosure.

According to a seventh aspect of the present disclosure, there is provided a computer-readable medium having computer program codes embodied thereon which, when executed on a computer, cause the computer to perform any step of the method according to the fifth aspect of the present disclosure.

According to an eighth aspect of the present disclosure, there is provided an apparatus which may be implemented as a second network node. The apparatus may comprise a receiving unit and a determining unit. In accordance with some exemplary embodiments, the receiving unit may be operable to carry out at least the receiving step of the method according to the fifth aspect of the present disclosure. The determining unit may be operable to carry out at least the determining step of the method according to the fifth aspect of the present disclosure.

According to a ninth aspect of the present disclosure, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station which may perform any step of the method according to the first or fifth aspect of the present disclosure.

According to a tenth aspect of the present disclosure, there is provided a communication system including a host computer. The host computer may comprise processing circuitry configured to provide user data, and a communication interface configured to forward the user data to a cellular network for transmission to a UE. The cellular network may comprise a base station having a radio interface and processing circuitry. The base station's processing circuitry may be configured to perform any step of the method according to the first or fifth aspect of the present disclosure.

According to an eleventh aspect of the present disclosure, there is provided a method implemented in a communication system which may include a host computer, a base station and a UE. The method may comprise, at the host computer, receiving, from the base station, user data origina-ting from a transmission which the base station has received from the UE. The base station may perform any step of the method according to the first or fifth aspect of the present disclosure.

According to a twelfth aspect of the present disclosure, there is provided a communication system which may include a host computer. The host computer may comprise a communication interface configured to receive user data originating from a transmission from a UE to a base station. The base station may comprise a radio interface and processing circuitry. The base station's processing circuitry may be con-figured to perform any step of the method according to the first or fifth aspect of the present disclosure.

[Advantageous Effects]

Various exemplary embodiments of the present disclosure propose a solution for DC, which may optimize MR-DC CA configuration, e.g., by signaling additional information (e.g., achievable total throughput, etc.) for selection of a band combination (BC) and the associated feature set (FS) in MR-DC band combination coordination between an MN and an SN, so that the efficiency of network operation can be improved with maximized MR-DC CA throughput.

[Description of Drawings]

The disclosure itself, the preferable mode of use and further objectives are best understood by reference to the following detailed description of the embodiments when read in conjunction with the accompanying drawings, in which:

Figs.1A-1F are diagrams illustrating exemplary procedures for MR-DC according to some embodiments of the present disclosure;
Fig.2A is a diagram illustrating an exemplary procedure for MR-DC CA configuration according to an embodiment of the present disclosure;
Fig.2B is a diagram illustrating exemplary MR-DC capability checking according to an embodiment of the present disclosure;
Fig.2C is a diagram illustrating exemplary matching the filtered BCs to MN configuration according to an embodiment of the present disclosure;
Fig.2D is a diagram illustrating exemplary calculation of achievable peak throughput of a cell according to an embodiment of the present disclosure;
Fig.2E is a diagram illustrating exemplary calculation of achievable LTE CA peak throughput of an SCell configuration according to an embodiment of the present disclosure;
Fig.2F is a diagram illustrating exemplary evaluation of allowed BCs and FSs according to an embodiment of the present disclosure;
Fig.2G is a diagram illustrating an exemplary information element (IE) according to an embodiment of the present disclosure;

Fig.2H is a diagram illustrating exemplary evaluated MR-DC CA throughput of the filtered BCs according to an embodiment of the present disclosure;

Fig.2I is a diagram illustrating an exemplary information element (IE) according to another embodiment of the present disclosure;

Figs.2J-2L are diagrams illustrating exemplary MR-DC throughput according to some embodiments of the present disclosure;

Fig.3 is a diagram illustrating exemplary messages for MR-DC BC coordination according to an embodiment of the present disclosure;

Fig.4 is a diagram illustrating an exemplary architecture with split realization according to an embodiment of the present disclosure;

Fig.5A is a flowchart illustrating a method according to an embodiment of the present disclosure;

Fig.5B is a flowchart illustrating another method according to an embodiment of the present disclosure:

Figs.6A-6C are block diagrams illustrating various apparatuses according to some embodiments of the present disclosure;

Fig.7 is a block diagram illustrating a telecommunication network connected via an intermediate network to a host computer in accordance with some embodiments of the present disclosure;

Fig.8 is a block diagram illustrating a host computer communicating via a base station with a UE over a partially wireless connection in accordance with some embodiments of the present disclosure;

Fig.9 is a flowchart illustrating a method implemented in a communication system, in accordance with an embodiment of the present disclosure;

Fig.10 is a flowchart illustrating a method implemented in a communication system, in accordance with an embodiment of the present disclosure;

Fig.11 is a flowchart illustrating a method implemented in a communication system, in accordance with an embodiment of the present disclosure; and

Fig.12 is a flowchart illustrating a method implemented in a communication system, in accordance with an embodiment of the present disclosure.

[Mode for Invention]

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "communication network" refers to a network following any suitable communication standards, such as new radio (NR), long term evolution (LTE), LTE-Advanced, wideband code division multiple access (WCDMA), high-speed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "network node" refers to a network device in a communication network via which a terminal device accesses to the network and receives services therefrom. The network node may refer to a base station (BS), an access point (AP), a multi-cell/multicast coordination entity (MCE), a controller or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth.

Yet further examples of the network node comprise multi-standard radio (MSR) radio equipment such as MSR BSs, network controllers such as radio network controllers (RNCs) or base station controllers (BSCs), base transceiver stations (BTSs), transmission points, transmission nodes, positioning nodes and/or the like. More generally, however, the network node may represent any suitable device (or group of devices) capable, configured, arranged, and/or operable to enable and/or provide a terminal device access to a wireless communication network or to provide some service to a terminal device that has accessed to the wireless communication network.

It can be appreciated that the network node and/or the network function according to various embodiments can be implemented either as a network element on a dedicated hardware, as a software instance running on a dedicated hardware, or as a virtualized function instantiated on an appropriate platform, e.g. on a cloud infrastructure.

The term "terminal device" refers to any end device that can access a communication network and receive services therefrom. By way of example and not limitation, the terminal device may refer to a mobile terminal, a user equipment (UE), or other suitable devices. The UE may be, for example, a subscriber station, a portable subscriber station, a mobile station (MS) or an access terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

Wireless communication networks are widely deployed to provide various telecommunication services such as voice, video, data, messaging and broadcasts. 5G/NR technology may be used for the 5th generation cellular mobile systems that can provide improved performance related to data rate, coverage and capacity compared to legacy 4G/LTE systems.

MR-DC is the general term given to a range of different dual connectivity configuration options, largely associated with 5G/NR. With MR-DC, the master radio access network (RAN) node may function as the controlling entity, utilizing a secondary RAN for additional data capacity. Examples of MR-DC configurations may include EN-DC (EUTRA - NR Dual Connectivity), NR-DC (New Radio Dual Connectivity), NG EN-DC (NG-RAN - EUTRA Dual Connectivity) and NE-DC (NR - EUTRA Dual Connectivity).

As described in section 4.1.2 and section 4.1.3 of 3GPP TS 37.340 V16.3.0, MR-DC may be supported by evolved UMTS terrestrial radio access network (EUTRAN) or next generation-radio access network (NG-RAN), whose MR-DC nodes may be connected to evolved packet core (EPC) or 5G core (5GC). MR-DC with the EPC may be called as EN-DC. MR-DC with the 5GC may have three types of dual connectivity, including RAN E-UTRA-NR dual connectivity (NGEN-DC), NR-E-UTRA dual connectivity (NE-DC), and NR-NR dual connectivity (NR-DC).

MR-DC can support transmission of downlink user plane data simultaneously on both master cell group (MCG) and secondary cell group (SCG) resources of an SN terminated split bearer. Different packets may be sent on the two cell groups. This downlink user plane aggregation may improve the end user throughput.

- MCG: in MR-DC, a group of serving cells associated with the MN, comprising of the SpCell (PCell) and optionally one or more SCells. PCell (PrimaryCell) is SpCell (SpecialCell) of a MCG. SpCell is primary cell of a master or secondary cell group.

*94- SCG: in MR-DC, a group of serving cells associated with the SN, comprising of the SpCell (PSCell) and optionally one or more SCells. PSCell (PrimarySecondaryCell) is SpCell of a SCG.

The MCG and SCG can each support carrier aggregation on the cells within their respective cell groups. MR-DC band combination selection in both MN and SN may be performed for DC carrier aggregation configuration within the MCG and the SCG. This MR-DC band combination selection scheme may start with UE capability coordination, e.g., as described in 3GPP TS 37.340 V16.3.0. In brief, for the coordination the MN may signal a list of allowed EN-DC band combinations to the SN, and the SN may select an MR-DC band combination from the list of allowed MR-DC band combinations and signal one selected band combination back to the MN.

As to UE capability coordination, e.g., as described in section 7.3 of 3GPP TS 37.340 V16.3.0, in (NG)EN-DC and NE-DC, the capabilities of a UE supporting MR-DC may be carried by different capability containers. Some MR-DC related capabilities may be in the MR-DC container e.g. MR-DC band combinations, while other MR-DC related capabilities may be contained in the E-UTRA and NR capability containers e.g. feature sets. The MR-DC capabilities in the MR-DC container may need to be visible to both MN and SN, while the capabilities in the E-UTRA and NR containers may only need to be visible to the node of the concerned radio access technology (RAT). In NR-DC, all NR-DC related capabilities may be in the NR capability container and are visible to both MN and SN.

When retrieving MR-DC related capabilities, the MN may provide an MR-DC filter that affects the MR-DC related capabilities in MR-DC, E-UTRA and NR capability containers. When using different UE capability enquiry messages to retrieve the different containers, the MN may employ the same MR-DC filter in all enquiry messages. In the E-UTRA radio resource control (RRC) UE capability enquiry, the MR-DC filter may also be used for retrieval of NR capabilities, e.g., there is in fact one MR-DC/NR filter (while there is a separate filter for E-UTRA capabilities). Furthermore, the MN may store the retrieved capabilities and the corresponding filter, used to retrieve those capabilities, in the core network for later use.

For the UE capabilities requiring coordination between E-UTRA and NR (e.g., band combinations, baseband processing capabilities and the maximum power for frequency range 1 (FR1) the UE can use in the SCG) or between NR MN and NR SN (e.g., band combinations, baseband processing capabilities), it may be up to the MN to decide on how to resolve the dependency between MN and SN configurations. The MN then may provide the resulting UE capabilities usable for SCG configuration to the SN, including the list of allowed MR-DC band combinations and feature sets, and the SN may indicate the selected band combination and feature set to the MN. When subsequently reconfiguring the SCG, the SN may inform the MN whenever the band combination and/or feature set it selected for the SCG changes (e.g., even if the selection concerns a band combination and feature set that is allowed). As part of an SN initiated SN modification, the SN may also indicate the desired UE capabilities usable for SCG configuration (e.g., a band combination and a feature set) outside those allowed by the MN (e.g., it may re-negotiate the UE capabilities for SCG configuration), and it may be up to the MN to make the final decision whether to accept or reject the request.

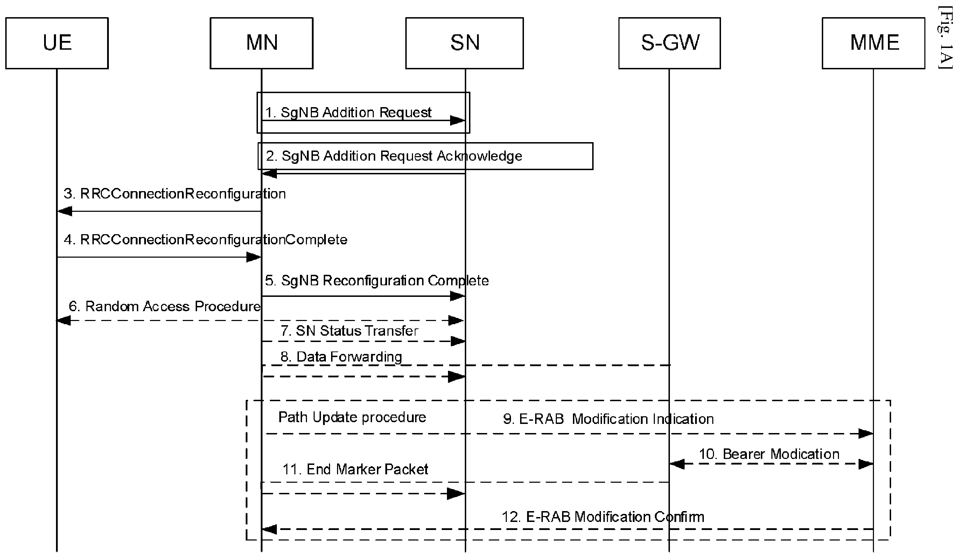

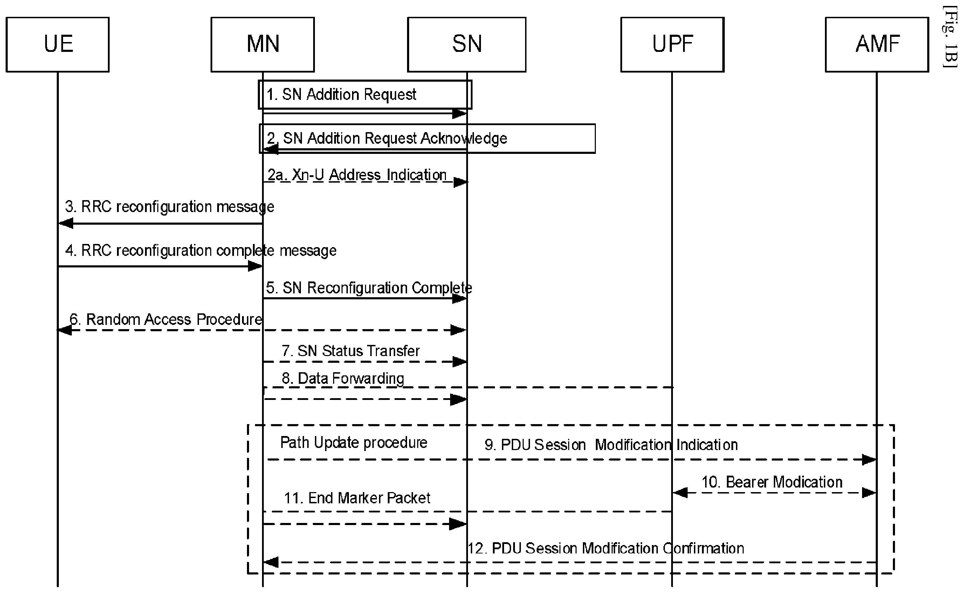

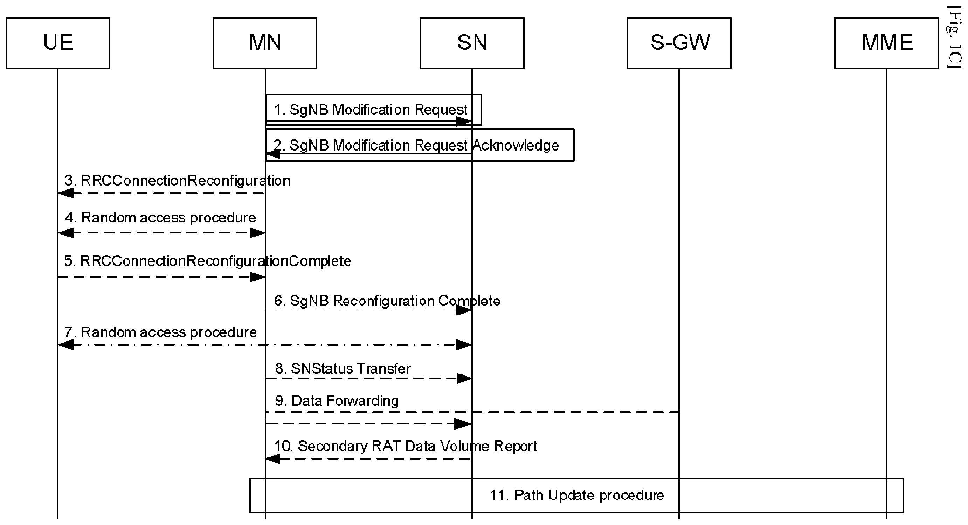

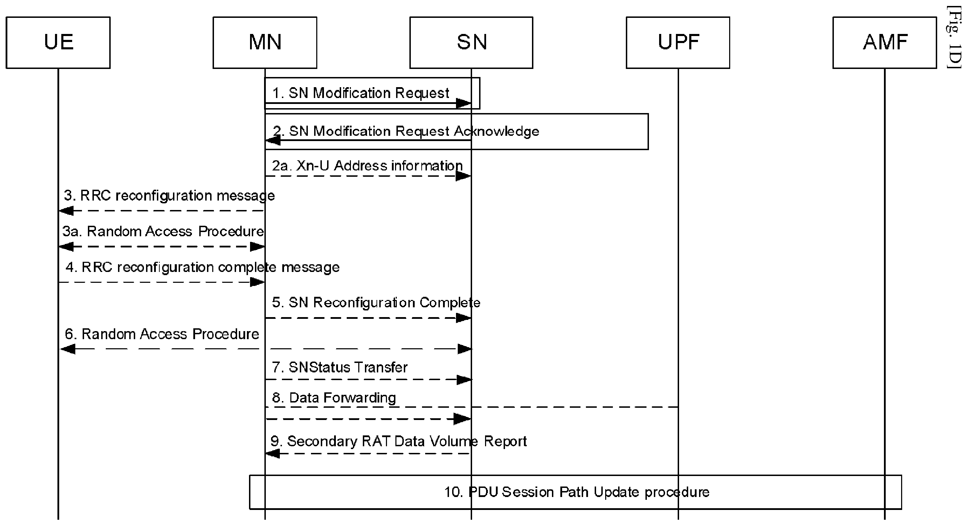

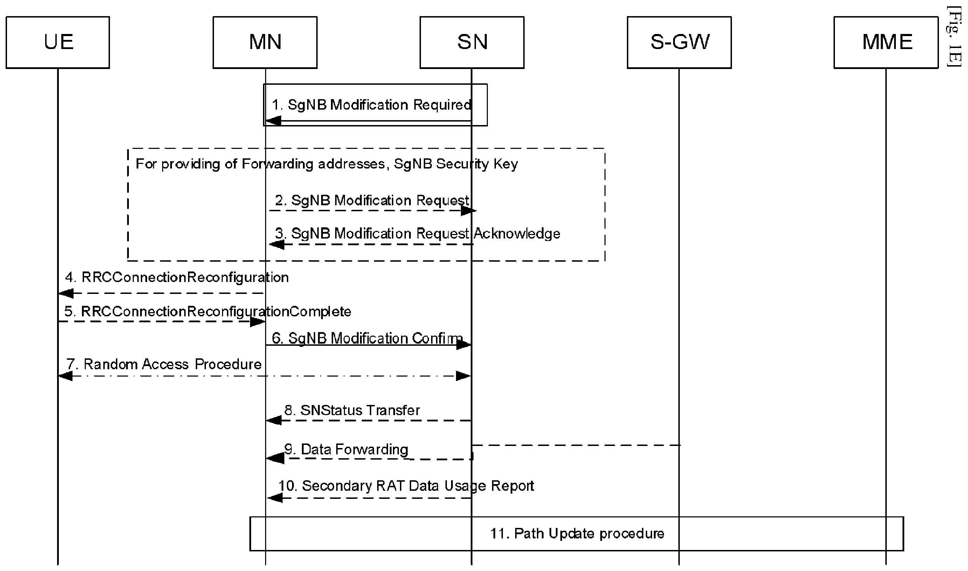

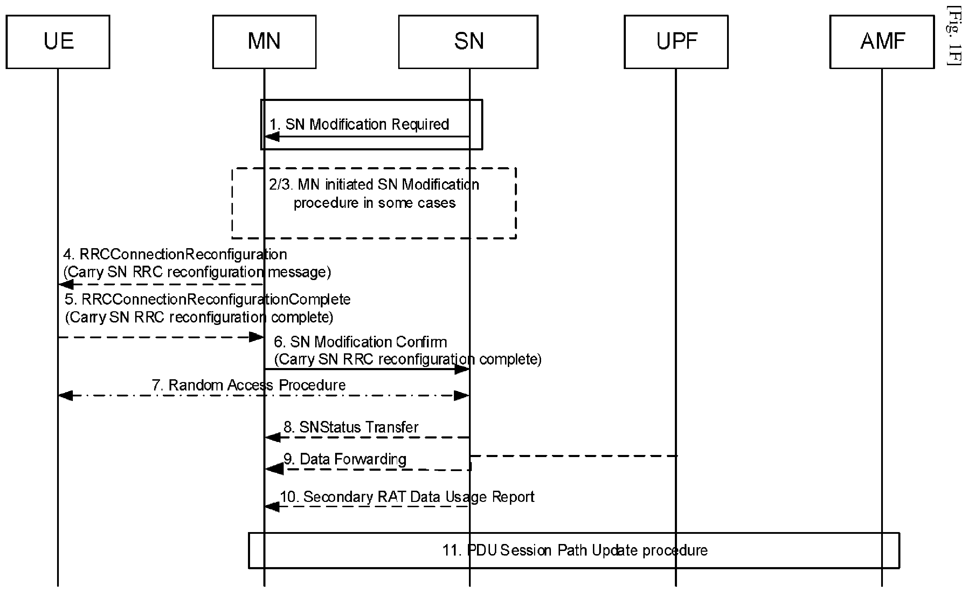

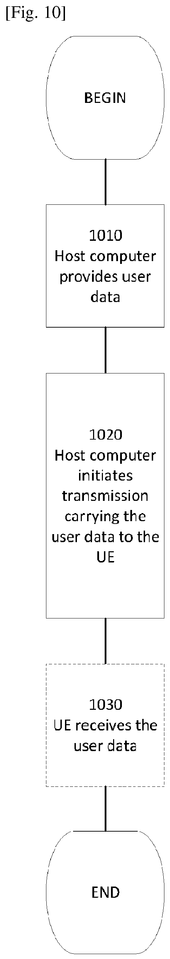

Figs.1A-1F are diagrams illustrating exemplary procedures for MR-DC according to some embodiments of the present disclosure. Specifically, Fig.1A shows an SN addition procedure for EN-DC, which is corresponding to Figure 10.2.1-1 in 3GPP TS 37.340 V16.3.0; Fig.1B shows an SN addition procedure for MR-DC with 5GC, which is corresponding to Figure 10.2.2-1 in 3GPP TS 37.340 V16.3.0; Fig.1C shows an MN initiated SN modification procedure for EN-DC, which is corresponding to Figure 10.3.1-1 in 3GPP TS 37.340 V16.3.0; Fig.1D shows an MN initiated SN modification procedure for MR-DC with 5GC, which is corresponding to Figure 10.3.2-1 in 3GPP TS 37.340 V16.3.0; Fig.1E shows an SN initiated SN modification procedure with MN involvement for EN-DC, which is corresponding to Figure 10.3.1-2 in 3GPP TS 37.340 V16.3.0; and Fig.1F shows an SN initiated SN modification procedure with MN involvement for MR-DC with 5GC, which is corresponding to Figure 10.3.2-2 in 3GPP TS 37.340 V16.3.0. In accordance with various embodiments, additional information for negotiation of MR-DC band combination selection may be signaled by messages marked with the box in Figs.1A-1F, e.g., SgNB Addition Request, SgNB Addition Request Acknowledge, SN Addition Request, SN Addition Request Acknowledge, SgNB Modification Request, SgNB Modification Request Acknowledge, SN Modification Request, SN Modification Request Acknowledge, SgNB Modification Required, SN Modification Required, etc.

During the secondary node addition and secondary node modification procedures, as described in 3GPP TS 37.340 V16.3.0, the MR-DC band combination may be chosen in the SN in coordination with the list of allowed MR-DC band combinations and feature sets (also referred as *allowedBC-ListMRDC,* e.g., as described in 3GPP TS 38.331 V16.2.0, where the entire content of this technical specification is incorporated into the present disclosure by reference, which may be an IE in an inter-node RRC message) signaled by the MN. The MR-DC capable UE may be configured with the MCG and SCG information according to the chosen MR-DC band combination and feature set (also referred as *selectedBandCombination,* e.g., as described in 3GPP TS 38.331 V16.2.0, which may be an IE in an inter-node RRC message).

The *allowedBC-ListMRDC* in an inter-node message may be sent from the MN to the SN over X2AP: SgNB Addition Request or SgNB Modification Request messages for EN-DC and XnAP: SN Addition Request or SN Modification Request messages for MR-DC with 5GC. An exemplary application of the *allowedBC-ListMRDC* in the inter-node message may be as below:

```
configRestrictInfo {

        allowedBC-ListMRDC {

            BandCombinationInfo {

                bandCombinationIndex 1,

                allowedFeatureSetsList {

                    FeatureSetEntryIndex 1

                    FeatureSetEntryIndex 2

                }

                bandCombinationIndex 3,

                allowedFeatureSetsList {

                    FeatureSetEntryIndex 2

                }

            }

        },

        ..

    }
```

The *selectedBandCombination* in an inter-node message may be sent from the SN to the MN over X2AP: SgNB Addition Request Acknowledge or SgNB Modification Request Acknowledge or SgNB Modification Required messages for EN-DC and XnAP: SN Addition Request Acknowledge or SN Modification Request Acknowledge or SN Modification Required messages for MR-DC with 5GC. An exemplary application of the *selectedBandCombination* in the inter-node message may be as below:

```
selectedBandCombination {

        bandCombinationIndex 1,

        requestedFeatureSets 1

    }
```

This procedure may be referred as X2 or Xn based MR-DC band combination coordination. The IEs in the messages may be defined as below e.g. as described in 3GPP TS 38.331 V16.2.0.

·*allowedBC-ListMRDC*: A list of indices referring to band combinations in MR-DC capabilities from which the SN may be allowed to select the SCG band combination. Each entry refers to a band combination numbered according to *supportedBandCombinationList* in the *UE-MRDC-Capability* (in case of (NG)EN-DC or NE-DC) or *UE-NR-Capability* (in case of NR-DC) and the feature sets allowed for each band entry. All MR-DC band combinations indicated by this field may comprise the MCG band combination, which is a superset of the MCG band(s) selected by the MN.

· *bandCombinationIndex:* In case of NR-DC, this field may indicate the position of a band combination in the *supportedBandCombinationList.* In case of NE-DC, this field may indicate the position of a band combination in the *supportedBandCombinationList* and/or *supportedBandCombinationListNEDC-Only.* In case of (NG)EN-DC, this field may indicate the position of a band combination in the *supportedBandCombinationList* and/or *supportedBand-CombinationList-UplinkTxSwitch.* Band combination entries in *supportedBandCombinationList* may be referred by an index which corresponds to the position of a band combination in the *supportedBandCombinationList.* Band combination entries in *supportedBandCombinationListNEDC-Only* may be referred by an index which corresponds to the position of a band combination in the *supportedBandCombinationListNEDC-Only* increased by the number of entries in *supportedBandCombinationList.* Band combination entries in *supportedBandCombinationList-UplinkTxSwitch* may be referred by an index which corresponds to the position of a band combination in the *supportedBand-CombinationList-UplinkTxSwitch* increased by the number of entries in *supportedBandCombinationList.*

· *allowedFeatureSetsList:* Defines a subset of the entries in a *FeatureSetCombination.* Each index may identify a position in the *FeatureSetCombination,* which corresponds to one *FeatureSetUplink/Downlink* for each band entry in the associated band combination.

· *selectedBandCombination:* Indicates the band combination selected by the SN in (NG)EN-DC, NE-DC, and NR-DC. The SN may inform the MN with this field whenever the band combination and/or feature set is selected for the SCG changes (e.g., even if the new selection concerns a band combination and/or feature set that is allowed by the *allowedBC-ListMRDC*).

· *requestedFeatureSets:* The position in the *FeatureSetCombination* which may identify one *FeatureSetUplink/-Downlink* for each band entry in the associated band combination.

As mentioned above, the MN and the SN can each support carrier aggregation. MR-DC band combination selection considering SCells within MCG and SCG may be performed respectively in both MN and SN for the MR-DC CA configuration during X2 or Xn based MR-DC band combination coordination.

Current solutions may not support MR-DC CA throughput maximization since it may not be able to support baseband processing capability negotiation between the MN and the SN via X2 or Xn. Hence, the SCell selection for MR-DC CA configuration may be biased by the MN or the SN somehow.

For example, there may be a solution that the MN may first maximize the CA throughput of MCG or try to choose prioritized SCells for MCG during the SCell selection, and then send the *allowedBC-ListMRDC* in which each band combination matches the selected SCells. It means that the SN may receive only a few of the allowed band combinations and take what is left among them according to the UE capability for SCG SCell decision. Finally, the MN may complete the MR-DC CA configuration with the *selectedBandCombination* sent from the SN. It may be a sort of the MN preferred CA configuration in MR-DC.

On the contrary to the solution giving preference to the MN, MCG SCells may not be chosen in the MN during the preparation of *allowedBC-ListMRDC* when an SN preferred SCell selection solution is considered. If the MN sends the allowed band combinations and feature sets as many as possible to the SN, the SN can make a choice among the many allowed band combinations and feature sets according to the SN's preference possibly in favor of NR CA throughput maximization. Here, the MN may complete UE configuration with only one band combination and one feature set selected by the SN, since the SN may not send back a list of selected band combinations and feature sets with the current solutions.

The MR-DC band combination coordination with a limited choice in one node without even additional information of the other node, i.e. a sort of black-box selection in both MN and SN, may cause suboptimal MR-DC CA configuration. Table 1 shows an example of peak throughput with different band combinations.

Table 1

| Scenario # | NR BW | NR Peak Throughput | LTE Peak Throughput (EN-DC Inactive) | LTE Peak Throughput (EN-DC Active) | EN-DC Peak Throughput | Net Gain with EN-DC Active? |
|---|---|---|---|---|---|---|
| 1 | 20 | 300Mbps | 2Gbps | 1.4Gbps | 1510Mbps | -490Mbps |
| 2 | 40 | 600Mbps | 2Gbps | 1.4Gbps | 1780Mbps | -220Mbps |
| 3 | 60 | 900Mbps | 2Gbps | 1.4Gbps | 2050Mbps | 50Mbps |
| 4 | 80 | 1.2Gbps | 2Gbps | 1Gbps | 1980Mbps | -20Mbps |
| 5 | 100 | 1.5Gbps | 2Gbps | 1Gbps | 2250Mbps | 250Mbps |

It can be appreciated that although the EN-DC peak throughput is listed in Table 1, the scenarios may be given by many different sorts of supported band combinations in UE capabilities for EUTRA, EUTRA-NR and NR. The example in Table 1 takes some assumptions as below:

· UE assumptions

- EN-DC Active

■ supported up to 14 LTE layers for NR BW <= 60<MHz

■ supported up to 10 LTE layers for NR BW > 60<MHz

- EN-DC Inactive: supported up to 20 LTE layers

·LTE assumptions

- Unloaded carriers
- Peak Throughput for 20MHz BW: ~100Mbps per layer

· NR assumptions

*146- Unloaded carriers

- Peak Throughput for 20MHz BW (TDD): ~300Mbps for 4 layers
- Peak Throughput for 40MHz BW (TDD): ~600Mbps for 4 layers

*149- Peak Throughput for 60MHz BW (TDD): ~900Mbps for 4 layers

- Peak Throughput for 80MHz BW (TDD): -1.2Gbps for 4 layers
- Peak Throughput for 100MHz BW (TDD): Peak ~1.5Gbps for 4 layers
- EN-DC efficiency: 90% (this may reduce the net gain further).

According to Table 1, it can be seen that there may be the following issues in the MR-DC band combination coordination:

- Cannot provide achievable MR-DC peak throughput (e.g., in the example of Table 1, Scenario 5 is best from total EN-DC throughput point of view; however, if LTE CA throughput is focused in EN-DC, Scenarios 1, 2, and 3 may happen);

- Cannot consider net gain with MR-DC active, in some cases the single (meaning LTE only, 'EN-DC Inactive', in the example of Table 1) is better than MR-DC (EN-DC may not have to be set if there is only Scenario 1 in this example) from EN-DC peak throughput point of view. Even if the net **L1** data rate with MR-DC is smaller than using only MCG, the MR-DC may be kept. Due to UE capability (band combinations and layers) and amount of NR deployed, it may lead to worse performance for some UEs, compared to MCG only UEs.

Various exemplary embodiments of the present disclosure propose a solution for MR-DC, which can support optimized capability negotiation between an MN and an SN to achieve MR-DC CA throughput maximization. In accordance with an exemplary embodiment, in signaling between the MN and the SN for MR-DC band combination coordination, achievable CA throughput of the band combination and feature set may be contained in information elements (IEs) such as *allowedBC-ListMRDC* and *selectedBandCombination.* According to an embodiment, for an inter-node RRC message between the MN and the SN, e.g., the inter-node RRC message as described in 3GPP 38.331 V16.2.0, a new field may be introduced or an existing field may be reused to carry additional information about the achievable CA throughput of the band combination and feature set. The MN and the SN can make the most of this kind of additional information in selection of the band combination and feature set. Various embodiments may support greater coordination of MR-DC band combination. In an embodiment, the SN may select a MR-DC band combination and feature set that has the highest achievable total throughput of MCG and SCG, e.g., a sort of white-box selection in terms of "data rate". In addition, various embodiments may implement efficient network operation. According to an embodiment, the SN may provide the estimated data rate achievable with the chosen MCG and SCG configuration to the MN. The MN can compare the estimated data rate achievable with the chosen MCG and SCG configuration to the MCG data rate achievable when not configuring the SCG, and determine whether to configure MR-DC for a concerned UE.

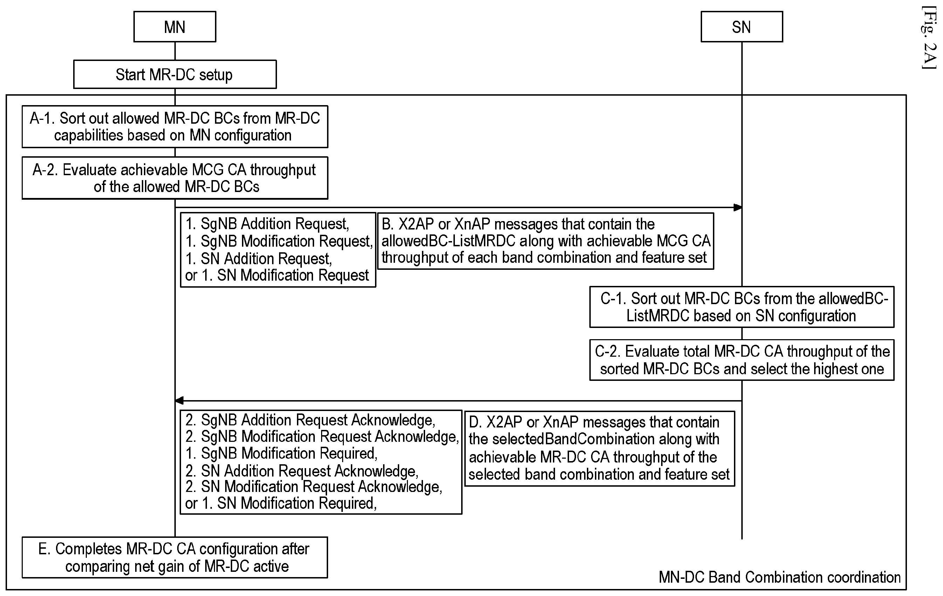

Fig.2A is a diagram illustrating an exemplary procedure for MR-DC CA configuration according to an embodiment of the present disclosure. The procedure shown in Fig.2A may be applied to various scenarios (e.g., a secondary node addition procedure and a secondary node modification procedure, etc.) and the signaling between an MN and an SN of all kinds of MR-DC configuration such as MR-DC with the EPC (EN-DC), MR-DC with the 5GC; RAN E-UTRA-NR dual connectivity (NGEN-DC), NR-E-UTRA dual connectivity (NE-DC), and NR-NR dual connectivity (NR-DC).

As shown in Fig.2A, the exemplary procedure for MR-DC CA configuration may include the following steps:

- Step A (which is shown as steps A-1 and A-2 in Fig.2A): the MN may perform the evaluation for MCG CA throughput of MR-DC based on the UE MR-DC capability and (master) node configuration.
- Step B: the MN may signal a parameter such as *allowedBC-ListMRDC* together with achievable CA throughput [Mbps] (e.g., in a new IE) of MCG to the SN.
- Step C (which is shown as steps C-1 and C-2 in Fig.2A): the SN may evaluate which band combination and feature set is the best for both MCG and SCG in terms of total MR-DC CA throughput, where SCG CA throughput evaluation may be performed based on the UE MR-DC capability and (secondary) node configuration.
- Step D: the SN may select the band combination and feature set (e.g., indicated by a parameter such as *selectedBandCombination*) that is the highest rated one and signal it back to the MN with total achievable MR-DC CA throughput [Mbps] (e.g., in a new IE).
- Step E: the MN may complete MR-DC band combination coordination based on the band combination and feature set received from the SN, where the MN may decide if it is better to stop the secondary node addition procedure and the secondary node modification procedure (or trigger a secondary node release procedure) through the comparison of net gain with MR-DC active.

It can be appreciated that network elements and signaling messages shown in Fig.2A are just examples, and more or less alternative network elements and signaling messages may be involved in the procedure for MR-DC CA configuration according to various embodiments of the present disclosure.

In accordance with an exemplary embodiment, for step A-1, the MN may first check MR-DC capability and filter out the band combinations and feature sets if they do not have proper bands for CA within the MCG. For example, the MN may perform the following operations:

A-1-i. Filtering out the band combinations: the MN may filter out all MR-DC band combinations which do not involve the current PCell band from MR-DC capabilities.
A-1-ii. Filtering out feature sets: the MN may also filter out all feature sets whose PCell component carrier (CC) is not bidirectional from the filtered band combinations.

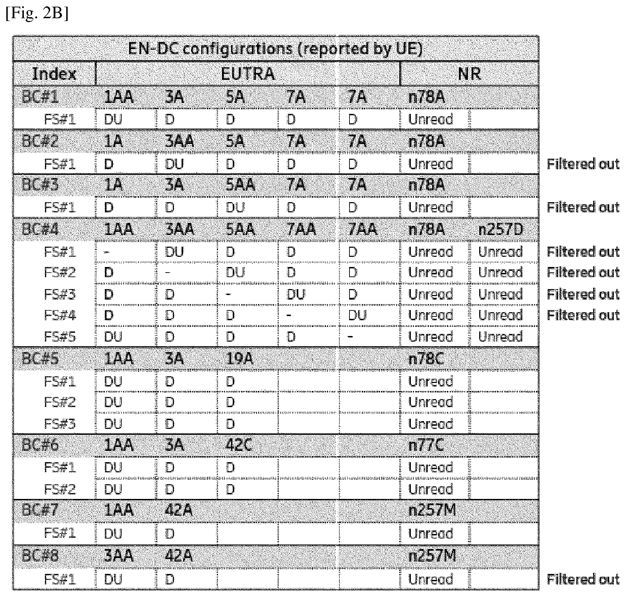

Fig.2B is a diagram illustrating exemplary MR-DC capability checking according to an embodiment of the present disclosure. Although an example for EN-DC case is shown in Fig.2B, similar way may be applied to various possible MR-DC cases, e.g., according to different implementations. In the example of MR-DC capability checking for LTE CA as shown in Fig.2B, several BCs or FSs may be filtered out for a UE which is attached to Band1 cell as PCell. For 1AA, '1' means EUTRA Band1, the former 'A' means CA bandwidth class of downlink (DL) component carrier, and the latter 'A' means CA bandwidth class of uplink (UL) component carrier. The same goes for other expressions of EUTRA bands. n78A is NR Band78 with bandwidth class of 'A' for DL component carrier. The same goes for other expressions of NR bands. In addition, 'DU' stands for component carrier capable of DL and UL, and 'D' stands for component carrier capable of DL only.

The EN-DC configurations in Fig.2B are related to eight BCs, including BC#1, BC#2, BC#3, BC#4, BC#5, BC#6, BC#7 and BC#8, e.g., as described in 3GPP TS 38.101-3 V16.5.0, where the entire content of this technical specification is incorporated into the present disclosure by reference. Each BC may be associated with one or more FSs. In the example shown in Fig.2B, BC#4 + FS#1 and BC#8 + FS#1 are filtered out because they do not have the PCell band (Band1). In addition, BC#2 + FS#1, BC#3 + FS#1, BC#4 + FS#2, BC#4 + FS#3, BC#4 + FS#4 are filtered out because their PCells(B1) do not support DL and UL but only DL.

In accordance with an exemplary embodiment, for step A-1, the MN may match the filtered band combinations and feature sets to the MN cells' configuration to find actually possible MCG SCell configurations. The filtered band combinations and feature sets that have matched MCG SCell configurations may be the allowed band combinations and feature sets. For example, the MN may perform the following operations:

A-1-iii.Checking the supported MCG BC part band of the filtered band combinations and feature sets: the MN may check if each band of MCG BC part in the filtered band combinations and feature sets is supported on MN.
A-1-iv.Confirming the possible highest CC aggregation level of MCG CA: the MN may confirm the highest CC aggregation level of MCG BC part with the supported bands of the filtered band combination and feature set.
A-1-v.Matching the MCG BC part to MN PCell and SCell configurations: the MN may match the MCG BC part to the possible MCG CA (PCell+SCells) configurations in the MN.

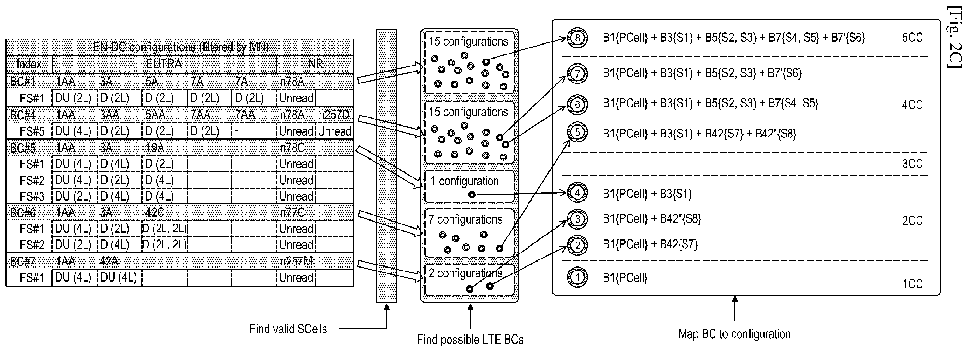

Fig.2C is a diagram illustrating exemplary matching the filtered BCs to MN configuration according to an embodiment of the present disclosure. Although an example for EN-DC case is shown in Fig.2C, similar way may be applied to various possible MR-DC cases, e.g., according to different implementations. In the example of matching the filtered BCs and feature sets to MN configuration as shown in Fig.2C, the filtered BCs and feature sets (which may be from Fig.2B) are matched to the configuration of MN to find possible LTE SCell configuration from the filtered BC for the UE. There may be the following assumptions for the MN in the example of Fig.2C:

· All Cells has 10MHz bandwidth (BW);

· S2 and S3 on B5 (Band5) are equivalent SCells;

· S4 and S5 on B7 (Band7) are equivalent SCells;

· For B7 (Band7), S6 has different earfcn from S4/S5; and

· S7 and S8 are different earfcn SCells on B42 (Band42).

In accordance with an exemplary embodiment, the MN such as an MeNB may first find valid SCells which are configurable in the MeNB, e.g., by checking CA parameters, cell status, and so on. As an example, the found valid SCell list may be as [B3{S1}, B5{S2, S3}, B7{S4, S5}, B7'{S6}, B42{S7}, B42''{S8}], where B7{S4, S5} has different earfcn than B7'{S6} and B42{S7} has different earfcn than B42''{S8}. Then the MeNB may find possible LTE part of BC per feature set with BCs validation, higher level CC of CA licenses, and so on. The right-hand side of Fig.2C shows the mapping of BCs to configurations. After that, the MeNB may map the BCs and feature sets to LTE configurations (e.g., a list of SCells candidates configured for the UE, where multiple-input multiple-output (MIMO) capabilities may be managed outside of the LTE configurations). In an embodiment, the MeNB may only create fallbacks that are worth to be evaluated. If there are not matched LTE configurations for some reasons, e.g. there is no valid SCell at all, then all the filtered BCs may be mapped to 1CC configuration which has only PCell.

In accordance with an exemplary embodiment, for step A-2, the MN may theoretically evaluate MCG CA throughput of the allowed band combinations and feature sets, e.g., by taking all factors of throughput calculation into account. For example, the MN may perform the following operations:

A-2-i.Evaluating peak throughput of the MCG CA configurations: the MN may evaluate achievable MCG CA throughput of the PCell and SCells configurations, e.g., by taking account of cell bandwidth, expected gain of MIMO layers, expected gain of modulation order, and frame factors of time division duplex (TDD) and licensed-assisted access (LAA) given by the ratio of the frequency division duplex (FDD) throughput.

A-2-ii.Advertising the achievable MCG CA peak throughput of the filtered band combination and feature set: the achievable MCG CA peak throughput for each of the filtered band combination and feature set may be given by the highest rated one among all possible MCG CA (PCell+SCells) configurations, because there may be many SCells with different capacities/capabilities on a supported band.

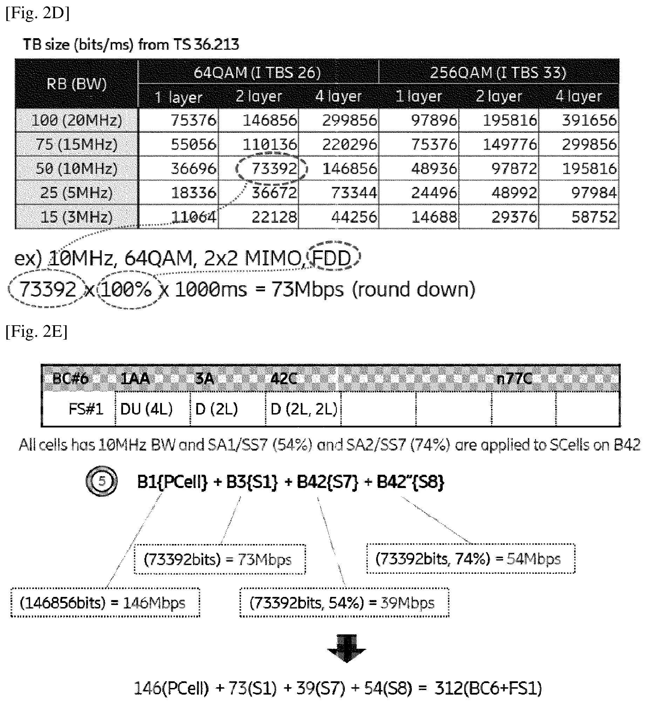

Fig.2D is a diagram illustrating exemplary calculation of achievable peak throughput of a cell according to an embodiment of the present disclosure. Although an example for EN-DC case is shown in Fig.2D, similar way may be applied to various possible MR-DC cases, e.g., according to different implementations. In the example shown in Fig.2D, the evaluation can be performed for LTE CA throughput of the allowed BCs, e.g., by taking account of bandwidth, MIMO layers, and frame factors of TDD and LAA, in order to calculate achievable LTE DL CA peak throughput of each LTE SCell configurations based on cell capabilities and feature sets.

In accordance with an exemplary embodiment, the achievable LTE DL CA peak throughput of the allowed BC may be calculated by aggregation of each cell's achievable peak throughput. For example, the peak throughput can be got from the multiply of maximum transmission block (TB) size can serve and frame factor of each cell as below.

$$\text{Peak Throughput} = \text{Max TB size} * \text{Frame factor} \qquad (1)$$

where TB size may be from a predetermined TB size table (e.g., as described in 3GPP TS 36.213 V16.3.0, where the entire content of this technical specification is incorporated into the present disclosure by reference) and the maximum bit rate may be given according to bandwidth, maximum MIMO layers, and modulation order. In the example of Fig.2D, TB size is 73,392 from 10MHz band width, supporting 64 quadrature amplitude modulation (64QAM) and 2 MIMO layer, and 73Mbps of achievable peak throughput from the cell has FDD frame structure.

Fig.2E is a diagram illustrating exemplary calculation of achievable LTE CA peak throughput of an SCell configuration according to an embodiment of the present disclosure. In the SCell configuration of Fig.2E, all cells have 10MHz BW and SA1/SS7 (54%) and SA2/SS7 (74%) are applied to SCells on B42. As shown in Fig.2E, a calculation result of achievable LTE CA peak throughput for BC#6+FS#1 is 312Mbps. Similarly, all possible LTE configurations may be evaluated and the one which has the highest throughput may be advertised because that is the achievable LTE DL CA peak throughput.

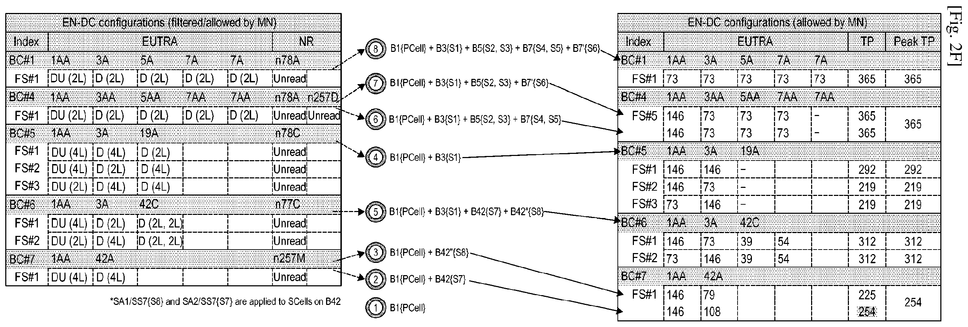

Fig.2F is a diagram illustrating exemplary evaluation of allowed BCs and FSs according to an embodiment of the present disclosure. In the example of Fig.2F, each BC+FS has just only one configuration but BC#7+FS#1. So, each BC+FS's achievable peak throughput may be set with the calculated throughput of each configuration, but BC#7+FS#1's achievable peak throughput may be set with the highest throughput '254' between the calculated results of configuration (254, B1{PCell} + B42{S7}) and configuration (225, B1{PCell} + B42''{S8}).

In accordance with an exemplary embodiment, for step B, the MN may include additional information about the evaluated achievable MCG CA throughput in a message sent to the SN, e.g., in SgNB Addition Request, SgNB Modification Request, SN Addition Request, or SN Modification Request messages.

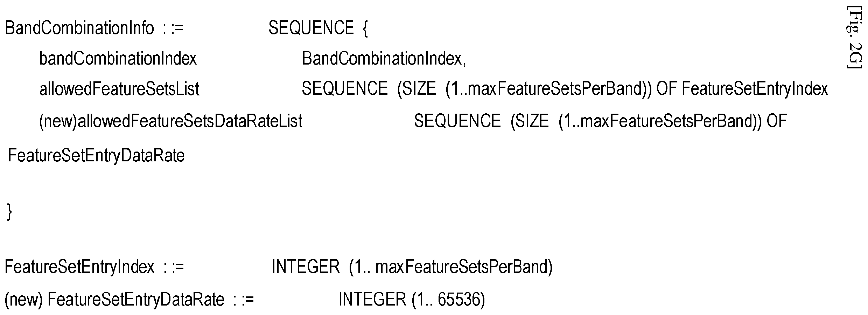

Fig.2G is a diagram illustrating an exemplary information element (IE) according to an embodiment of the present disclosure. As an example, the new IE may be *allowedFeatureSetsDataRateList, FeatureSetEntryDataRate,* etc., which may be carried in a message sent from the MN to the SN, e.g., the CE CG-ConfigInfo message as described in section 11.2.2 of 3GPP TS 38.331 V16.2.0. In an embodiment, the MN may send *allowedBC-ListMRDC* with the allowed band combinations and feature sets together with the evaluated achievable MCG CA throughput [unit: Mbps] in the new IE. As shown in Fig.2G, the new IE may be contained in *BandCombinationInfo.*

In accordance with an exemplary embodiment, for step C-1, the SN may first check UE-MRDC capability and filter out allowed BCs if they do not have proper bands for CA within SCG. A way of this may be similar to the embodiments described with respect to step A-1. For SN modification procedure initiated by the SN to send SgNB Modification Required or SN Modification Required messages, the allowed BCs given at the SN addition procedure or SN modification procedure initiated by the MN may be used. For example, the SN may perform the following operations:

C-1-i.Filtering out the allowed band combinations: the SN may filter out all the allowed BCs which do not involve the desired PSCell band from *allowedBC-ListMRDC*.
C-1-ii.Filtering out feature sets: the SN may also filter out all feature sets whose PSCell component carrier is not bidirectional from the filtered allowed band combinations.

In accordance with an exemplary embodiment, for step C-1, the filtered allowed BCs that have matched SCG SCell configurations may be the band combinations to be evaluated for CA within the SCG. A way of this may be similar to the embodiments described with respect to step A-1. For example, the SN may perform the following operations:

C-1-iii.Checking the supported SCG BC part band of the filtered allowed band combinations and feature sets: the SN may check if each band of SCG BC part in the filtered allowed band combinations and feature sets is supported on the SN.

C-1-iv.Confirming the possible highest CC aggregation level of SCG CA: the SN may confirm the highest CC aggregation level of SCG BC part with the supported bands of the filtered allowed band combination and feature set.

C-1-v.Matching the SCG BC part to SN PSCell and SCell configurations: the SN may match the SCG BC part to the possible SCG CA (PSCell+SCells) configurations in the SN.

In accordance with an exemplary embodiment, for step C-2, the SN may theoretically evaluate SCG CA throughput of the available filtered allowed band combinations, e.g., by taking all factors of throughput calculation into account. A way of this may be similar to the embodiments described with respect to step A-2. For example, the SN may perform the following operations:

C-2-i.Evaluating peak throughput of the SCG CA configurations: the SN may evaluate achievable SCG CA throughput of the PSCell and SCells configurations, e.g., by taking account of cell bandwidth, expected gain of MIMO layers, expected gain of modulation order, and frame factors of TDD and LAA given by the ratio of the FDD throughput.

C-2-ii. Advertising the achievable SCG CA peak throughput of the filtered allowed band combination and feature set: the achievable SCG CA peak throughput for each of the filtered allowed band combination and feature set may be given by the highest rated one among all possible SCG CA (PCell+SCells) configurations, because there may be many SCells with different capacities/capabilities on a supported band.

In accordance with an exemplary embodiment, for step C-2, the SN may select the best MR-DC CA throughput based on both evaluated SCG CA throughput and achievable MCG CA throughput received from the MN contained in the new IE (e.g., the new IE as described with respect to Fig.2G). For example, the SN may perform the following operations:

C-2-iii. Evaluating MR-DC CA throughput of the filtered allowed band combination and feature set: the SN may evaluate achievable total CA throughput *"achievableTotalThroughput",* which may be calculated as *FeatureSetEntryDataRate* (e.g., the achievable MCG CA peak throughput sent from the MN in step B) + the evaluated SCG CA throughput.

C-2-iv. Finding the highest MR-DC CA throughput combination: the SN may find the filtered allowed band combination and feature set that has the highest throughput of MR-DC CA.

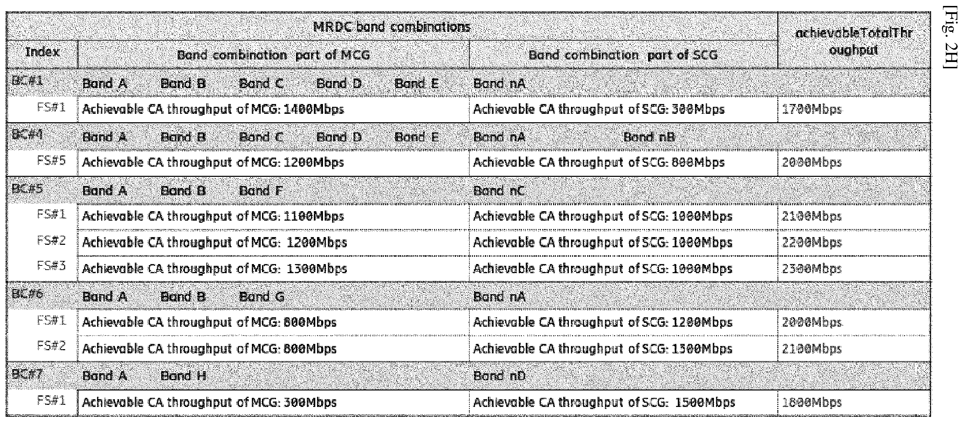

Fig.2H is a diagram illustrating exemplary evaluated MR-DC CA throughput of the filtered BCs according to an embodiment of the present disclosure. For each pair of band combination and feature set, Fig.2H shows the achievable CA throughput of MCG, the achievable CA throughput of SCG and the achievable total CA throughput. According to the evaluated MR-DC CA throughput of the filtered allowed BCs, the SN selects the BC#5 (*bandCombinationIndex* 5) with FS#3 (*FeatureSetEntryIndex* 3), since this pair of band combination and feature set has the best MR-DC CA throughput. It can be appreciated that other suitable criterions (e.g., considering service requirement, resource allocation, device capability, etc.) may also be used by the SN to select the band combination and feature set.

In accordance with an exemplary embodiment, for step D, the SN may include additional information about total achievable MR-DC CA throughput in a message sent to the MN, e.g., in SgNB Addition Request Acknowledge, SgNB Modification Request Acknowledge, SgNB Modification Required, SN Addition Request Acknowledge, SN Modification Request Acknowledge, or SN Modification Required messages.

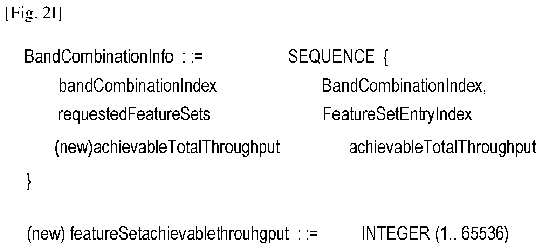

Fig.2I is a diagram illustrating an exemplary information element (IE) according to another embodiment of the present disclosure. As an example, the new IE may be *achievableTotalThroughput, featureSetachievablethrouhgput,* etc., which may be carried in a message sent from the SN to the MN, e.g., the CE CG-Config message as described in section 11.2.2 of 3GPP TS 38.331 V16.2.0. In an embodiment, the SN may signal back the *selectedBandCombination* that is the highest rated one together with total achievable MR-DC CA throughput [unit: Mbps] in the new IE. As shown in Fig.2I, the new IE may be contained in *BandCombinationInfo.*

In accordance with an exemplary embodiment, for step E, the MN may compare 'total achievable MR-DC CA throughput' in the received information (e.g., the additional information sent from the SN as *achievableTotalThrouhgput* in step D) to the MCG throughput with MR-DC inactive (e.g., MCG data rate achievable when not configuring the SCG), and decide whether to set up MR-DC or not. For example, the MN may perform the following operations:

E-i. Confirming MCG throughput with MR-DC inactive: the MN may check the current throughput of MCG only (where carrier aggregation may be working or not).

E-ii. Comparing *achievableTotalThrouhgput* to MCG throughput with MR-DC inactive: the MN may figure out Net gain through the comparison between *achievableTotalThrouhgput* and MCG only throughput.

E-iii.Deciding MR-DC setup:

- If it is worthwhile to add SCG, the MN may complete the MR-DC CA configuration for the UE with the best MR-DC band combination sent from the SN.
- If it is not worthwhile to add SCG, the MN may stop Secondary Node Addition or Secondary Node Modification.

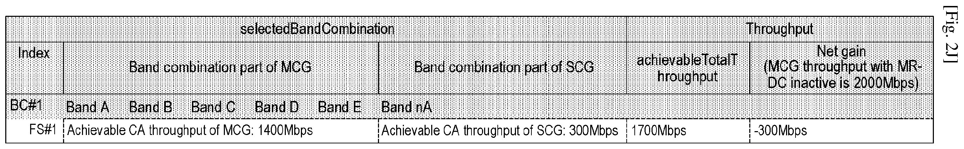

Figs.2J-2L are diagrams illustrating exemplary MR-DC throughput according to some embodiments of the present disclosure. In an embodiment of Fig.2J, the band combination BC#1 and feature set FS#1 is sent from the SN for MR-DC setup, then the MN may not configure this MR-DC combination for the UE because of minus net gain. In this case, since the MR-DC throughput of *selectedBandCombination* is with minus net gain, the UE may need to stay in MCG only.

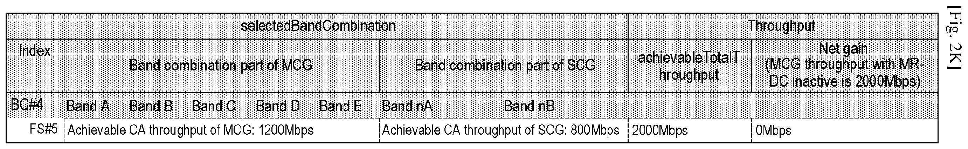

In an embodiment of Fig.2K, the band combination BC#4 and feature set FS#5 is sent from the SN for MR-DC setup, then the MN may either configure this MR-DC combination for the UE or not, because the MR-DC throughput of *selectedBandCombination* is with no net gain. For example, the decision may be made upon the MN's own policy.

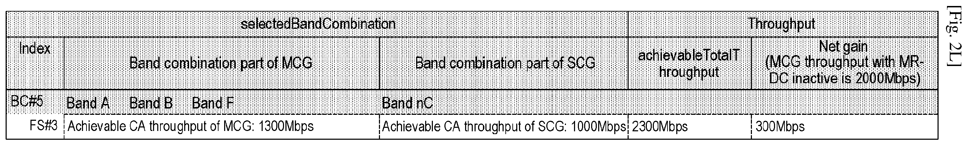

In an embodiment of Fig.2L, the band combination BC#5 and feature set FS#3 is sent from the SN for MR-DC setup, then the MN may configure this MR-DC combination for the UE since the total MR-DC throughput (*achievable-TotalThrouhgput*) is higher than the MCG only throughput, i.e. the MR-DC throughput of *selectedBandCombination* is with plus net gain.

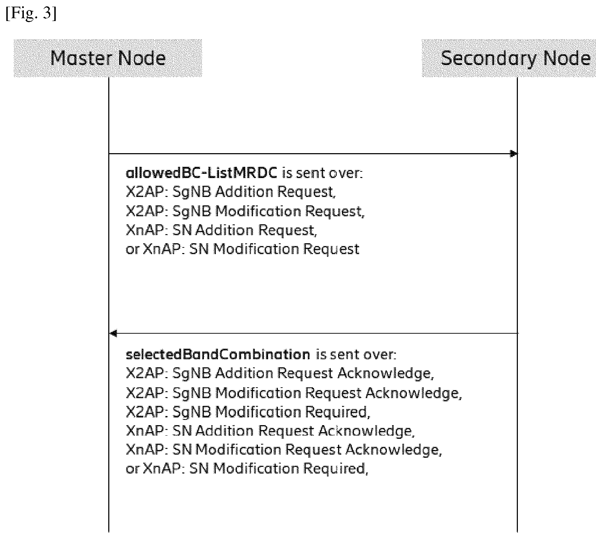

Fig.3 is a diagram illustrating exemplary messages for MR-DC BC coordination according to an embodiment of the present disclosure. The potential MR-DC throughput evaluation may be exchanged by various messages (e.g., X2AP or XnAP messages for MR-DC BC coordination, etc.) between a master node and a secondary node as depicted in Fig.3. The MR-DC throughput evaluation and the message exchange according to various embodiments may be independent from how the RAN (e.g., 3GPP network entities; eNB and/or gNB, etc.) is deployed. Various embodiments may work regardless of deployment type - embedded deployment or split deployment in cloud. In case of split deployment, one of (or both) the master node and the secondary node may be deployed in Cloud as virtualized RAN. and in case of embedded deployment, the eNB and the gNB may be deployed in the radio node in site.

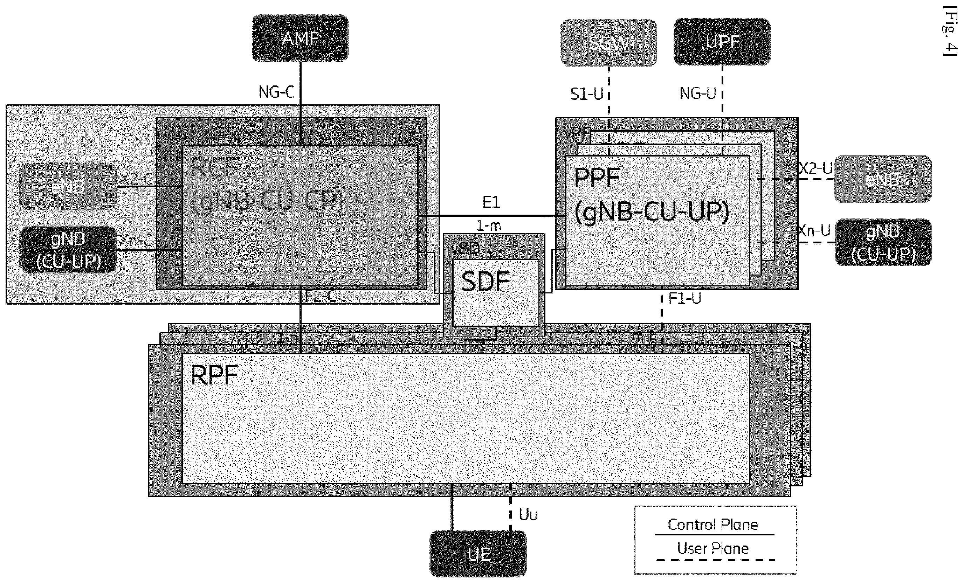

Fig.4 is a diagram illustrating an exemplary architecture with split realization according to an embodiment of the present disclosure. The conceptual NG-RAN architecture may be implemented e.g. as described in 3GPP TS 38.401 V16.3.0, where the entire content of this technical specification is incorporated into the present disclosure by reference. Some exemplary network entities or elements may be included in this architecture, e.g., access and mobility management function (AMF), serving gateway (SGW), user plane function (UPF), eNB, gNB, etc. For split realization with vRC and vPP, the gNB CU-CP may be instantiated to vRC and the gNB CU-UP may be instantiated to vPP, as shown in Fig.4. Various embodiments may be implemented on the gNB CU-CP (vRC) in cloud environment.

It is noted that some embodiments of the present disclosure are mainly described in relation to 4G/LTE or 5G/NR specifications being used as non-limiting examples for certain exemplary network configurations and system deployments. As such, the description of exemplary embodiments given herein specifically refers to terminology which is directly related thereto. Such terminology is only used in the context of the presented non-limiting examples and embodiments, and does naturally not limit the present disclosure in any way. Rather, any other system configuration or radio technologies may equally be utilized as long as exemplary embodiments described herein are applicable.

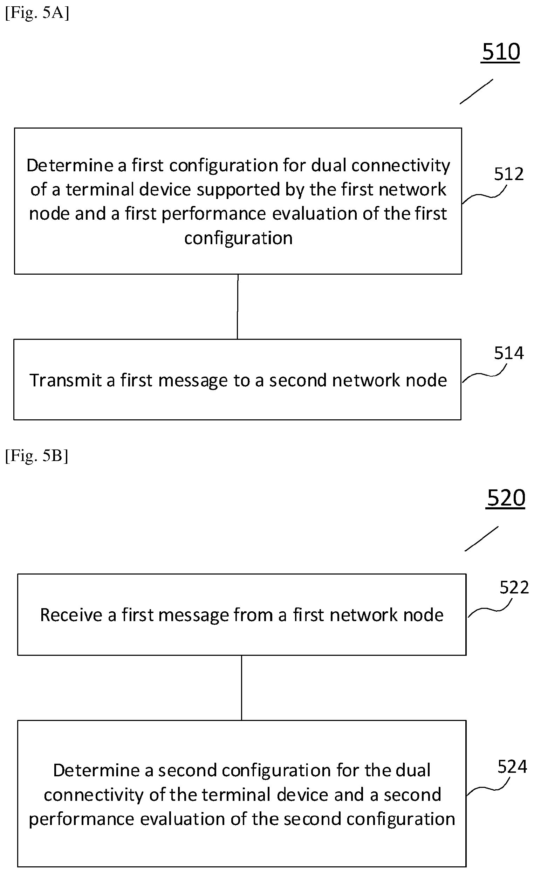

Fig.5A is a flowchart illustrating a method 510 according to an embodiment of the present disclosure. The method 510 illustrated in Fig.5A may be performed by a first network node or an apparatus communicatively coupled to the first network node. In accordance with an exemplary embodiment, the first network node may be a base station (e.g., an eNB, a gNB, etc.), an AP, a control node, or any other suitable network node which may be able to provide services to one or more terminal devices (e.g., UEs, etc.).

According to the exemplary method 510 illustrated in Fig.5A, the first network node may determine a first configuration for dual connectivity of a terminal device supported by the first network node and a first performance evaluation of the first configuration, as shown in block 512. In accordance with an exemplary embodiment, the first network node may transmit a first message to a second network node, as shown in block 514. The first message may indicate the first configuration and the first performance evaluation.

In accordance with an exemplary embodiment, the first configuration may include one or more CA configurations supported by the first network node (e.g., as described with respect to Fig.2B and Fig.2C). In accordance with another exemplary embodiment, the first performance evaluation may include one or more throughput evaluations for one or more CA configurations supported by the first network node (e.g., as described with respect to Fig.2D, Fig.2E and Fig.2F).

In accordance with an exemplary embodiment, the first configuration may indicate at least one of:

- one or more band combinations allowed for the dual connectivity of the terminal device by the first network node; and
- one or more feature sets associated with the one or more band combinations.

In accordance with an exemplary embodiment, the first performance evaluation may indicate CA throughput evaluated for each of the one or more band combinations and the associated one or more feature sets (e.g., as described with respect to Fig.2F).

In accordance with an exemplary embodiment, the CA throughput evaluated for each of the one or more band combinations and the associated one or more feature sets may be the highest throughput evaluated for CA configurations corresponding to each of the one or more band combinations and the associated one or more feature sets (e.g., as described with respect to Fig.2F).

In accordance with an exemplary embodiment, the first network node may receive a second message from the second network node. The second message may indicate a second configuration for the dual connectivity of the terminal device and a second performance evaluation of the second configuration. The second configuration may be determined by the second network node based at least in part on the first configuration.

In accordance with an exemplary embodiment, the second configuration may include: a first CA configuration selected from one or more CA configurations supported by the first network node; and a second CA configuration selected from one or more CA configurations supported by the second network node (e.g., as described with respect to Figs.2J-2K). In an embodiment, the one or more CA configurations supported by the second network node may be associated with the one or more CA configurations supported by the first network node (e.g., as described with respect to Fig.2H).

In accordance with an exemplary embodiment, the second performance evaluation may include a total throughput evaluation associated with a first throughput evaluation and a second throughput evaluation (e.g., as described with respect to Figs.2J-2K). The first throughput evaluation may be for a first CA configuration supported by the first network node. The second throughput evaluation may be for a second CA configuration supported by the second network node.

In accordance with an exemplary embodiment, the second configuration may indicate at least one of:

- a band combination selected from one or more band combinations which are allowed for the dual connectivity of the terminal device by both the first network node and the second network node; and
- a feature set associated with the selected band combination.

In accordance with an exemplary embodiment, the second performance evaluation may indicate total CA throughput associated with a first CA throughput and a second CA throughput (e.g., as described with respect to Figs.2J-2K). The first CA throughput may be evaluated by the first network node for the selected band combination and the associated feature set. The second CA throughput may be evaluated by the second network node for the selected band combination and the associated feature set.

In accordance with an exemplary embodiment, the selected band combination and the associated feature set may have the highest total CA throughput, among the one or more band combinations and associated feature sets which are allowed for the dual connectivity of the terminal device by both the first network node and the second network node.

In accordance with an exemplary embodiment, the method according to the first aspect of the present disclosure may further comprise: determining whether to set up the dual connectivity of the terminal device, according to the second message.

In accordance with an exemplary embodiment, the method according to the first aspect of the present disclosure may further comprise: determining a third performance evaluation with the dual connectivity of the terminal device being inactive.

In accordance with an exemplary embodiment, the method according to the first aspect of the present disclosure may further comprise: comparing the second performance evaluation with the third performance evaluation.

In accordance with an exemplary embodiment, the third performance evaluation may include a throughput evaluation of a current configuration for the terminal device by the first network node.

In accordance with an exemplary embodiment, the first network node may determine to set up the dual connectivity of the terminal device, when a result of the comparison meets a predetermined criterion (e.g., if the second performance evaluation is better than the third performance evaluation, etc.).

In accordance with an exemplary embodiment, the method according to the first aspect of the present disclosure may further comprise: setting up the dual connectivity of the terminal device according to the second configuration, when determining to set up the dual connectivity of the terminal device.

In accordance with an exemplary embodiment, the first network node may be configured to be a master node of the terminal device, and the second network node may be configured to be a secondary node of the terminal device.

In accordance with an exemplary embodiment, the first network node may determine not to set up the dual connectivity of the terminal device, when a result of the comparison meets another predetermined criterion (e.g., if the second performance evaluation is equal to or worse than the third performance evaluation, etc.). In accordance with another exemplary embodiment, the first network node may determine to release the dual connectivity of the terminal device, e.g., if the terminal device is currently configured with the dual connectivity but the throughput of MCG only configuration is higher than the total throughput of dual connectivity configuration, etc.

In accordance with an exemplary embodiment, the first message may be:

- an addition request message for a secondary node of the terminal device; or
- a modification request message for the secondary node of the terminal device.

In accordance with an exemplary embodiment, the second message may be:

- an addition request acknowledge message for a secondary node of the terminal device;
- a modification request acknowledge message for the secondary node of the terminal device; or
- a modification required message for the secondary node of the terminal device.

Fig.5B is a flowchart illustrating a method 520 according to an embodiment of the present disclosure. The method 520 illustrated in Fig.5B may be performed by a second network node or an apparatus communicatively coupled to the second network node. In accordance with an exemplary embodiment, the second network node may be a base station (e.g., an eNB, a gNB, etc.), an AP, a control node, or any other suitable network node which may be able to provide services to one or more terminal devices (e.g., UEs, etc.).

According to the exemplary method 520 illustrated in Fig.5B, the second network node may receive a first message from a first network node, as shown in block 522. The first message may indicate a first configuration for dual connectivity of a terminal device supported by the first network node and a first performance evaluation of the first configuration. In accordance with an exemplary embodiment, the second network node may determine a second configuration for the dual connectivity of the terminal device and a second performance evaluation of the second configuration, as shown in block 524. The second configuration may be determined by the second network node based at least in part on the first configuration.

In accordance with an exemplary embodiment, the first message received by the second network node according to the method 520 may correspond to the first message transmitted by the first network node according to the method 510. Thus, the first message as described with respect to Fig.5A and Fig.5B may have the same or similar contents and/or feature elements.

Similarly, the first configuration as described with respect to Fig.5A and Fig.5B may have the same or similar contents and/or feature elements, and the first performance evaluation as described with respect to Fig.5A and Fig.5B may have the same or similar contents and/or feature elements.

In accordance with an exemplary embodiment, the second network node may transmit a second message to the first network node. The second message may indicate the second configuration for the dual connectivity of the terminal device and the second performance evaluation of the second configuration.

In accordance with an exemplary embodiment, the second message transmitted by the second network node according to the method 520 may correspond to the second message received by the first network node according to the method 510. Thus, the second message as described with respect to Fig.5A and Fig.5B may have the same or similar contents and/or feature elements.

Similarly, the second configuration as described with respect to Fig.5A and Fig.5B may have the same or similar contents and/or feature elements, and the second performance evaluation as described with respect to Fig.5A and Fig.5B may have the same or similar contents and/or feature elements.

In accordance with an exemplary embodiment, the second network node may set up the dual connectivity of the terminal device according to the second configuration, when the first network node determines to set up the dual connectivity of the terminal device according to the second message.

In accordance with an exemplary embodiment, the second network node may release the dual connectivity of the terminal device, when the first network node determines to release the dual connectivity of the terminal device according to the second message.

Various exemplary embodiments according to the present disclosure may achieve higher throughput of MR-DC configuration compared with the existing solutions that may degrade the throughput in an SN due to higher throughput provided in an MN. In accordance with various exemplary embodiments, additional information about achievable total throughput considering both MN and SN may be exchanged in MR-DC BC coordination, which may provide better data rate to the MR-DC UE.

The various blocks shown in Figs.5A-5B may be viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

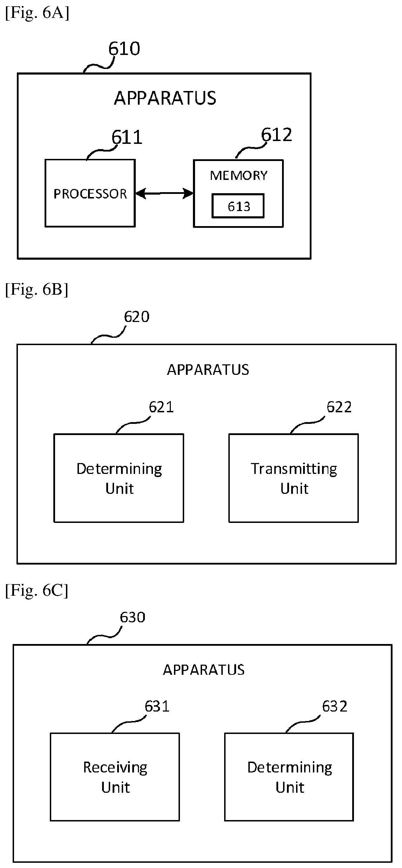

Fig.6A is a block diagram illustrating an apparatus 610 according to various embodiments of the present disclosure. As shown in Fig.6A, the apparatus 610 may comprise one or more processors such as processor 611 and one or more memories such as memory 612 storing computer program codes 613. The memory 612 may be non-transitory machine/processor/computer readable storage medium. In accordance with some exemplary embodiments, the apparatus 610 may be implemented as an integrated circuit chip or module that can be plugged or installed into a first network node as described with respect to Fig.5A, or a second network node as described with respect to Fig.5B. In such cases, the apparatus 610 may be implemented as a first network node as described with respect to Fig.5A, or a second network node as described with respect to Fig.5B.

In some implementations, the one or more memories 612 and the computer program codes 613 may be configured to, with the one or more processors 611, cause the apparatus 610 at least to perform any operation of the method as described in connection with Fig.5A. In some implementations, the one or more memories 612 and the computer program codes 613 may be configured to, with the one or more processors 611, cause the apparatus 610 at least to perform any operation of the method as described in connection with Fig.5B. Alternatively or additionally, the one or more memories 612 and the computer program codes 613 may be configured to, with the one or more processors 611, cause the apparatus 610 at least to perform more or less operations to implement the proposed methods according to the exemplary embodiments of the present disclosure.

Fig.6B is a block diagram illustrating an apparatus 620 according to some embodiments of the present disclosure. As shown in Fig.6B, the apparatus 620 may comprise a determining unit 621 and a transmitting unit 622. In an exemplary embodiment, the apparatus 620 may be implemented in a first network node. The determining unit 621 may be operable to carry out the operation in block 512, and the transmitting unit 622 may be operable to carry out the operation in block 514. Optionally, the determining unit 621 and/or the transmitting unit 622 may be operable to carry out more or less operations to implement the proposed methods according to the exemplary embodiments of the present disclosure.

Fig.6C is a block diagram illustrating an apparatus 630 according to some embodiments of the present disclosure. As shown in Fig.6C, the apparatus 630 may comprise a receiving unit 631 and a determining unit 632. In an exemplary embodiment, the apparatus 630 may be implemented in a second network node. The receiving unit 631 may be operable to carry out the operation in block 522, and the determining unit 632 may be operable to carry out the operation in block 524. Optionally, the receiving unit 631 and/or the determining unit 632 may be operable to carry out more or less operations to implement the proposed methods according to the exemplary embodiments of the present disclosure.

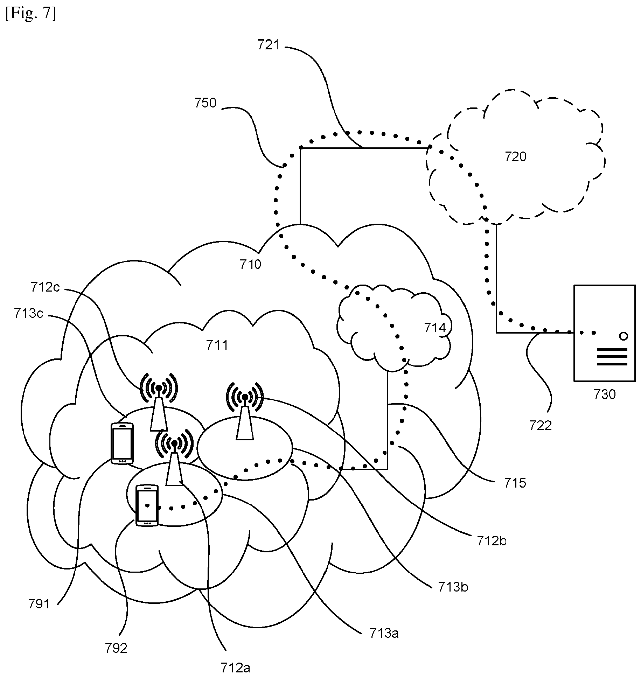

Fig.7 is a block diagram illustrating a telecommunication network connected via an intermediate network to a host computer in accordance with some embodiments of the present disclosure.

With reference to Fig.7, in accordance with an embodiment, a communication system includes a telecommunication network 710, such as a 3GPP-type cellular network, which comprises an access network 711, such as a radio access network, and a core network 714. The access network 711 comprises a plurality of base stations 712a, 712b, 712c, such as NBs, eNBs, gNBs or other types of wireless access points, each defining a corresponding coverage area 713a, 713b, 713c. Each base station 712a, 712b, 712c is connectable to the core network 714 over a wired or wireless connection 715. A first UE 791 located in a coverage area 713c is configured to wirelessly connect to, or be paged by, the corresponding base station 712c. A second UE 792 in a coverage area 713a is wirelessly connectable to the corresponding base station 712a. While a plurality of UEs 791, 792 are illustrated in this example, the disclosed embodiments are equally applicable to a situation where a sole UE is in the coverage area or where a sole UE is connecting to the corresponding base station 712.

The telecommunication network 710 is itself connected to a host computer 730, which may be embodied in the hardware and/or software of a standalone server, a cloud-implemented server, a distributed server or as processing resources in a server farm. The host computer 730 may be under the ownership or control of a service provider, or may be operated by the service provider or on behalf of the service provider. Connections 721 and 722 between the telecommunication network 710 and the host computer 730 may extend directly from the core network 714 to the host computer 730 or may go via an optional intermediate network 720. An intermediate network 720 may be one of, or a combination of more than one of, a public, private or hosted network; the intermediate network 720, if any, may be a backbone network or the Internet; in particular, the intermediate network 720 may comprise two or more sub-networks (not shown).

The communication system of Fig.7 as a whole enables connectivity between the connected UEs 791, 792 and the host computer 730. The connectivity may be described as an over-the-top (OTT) connection 750. The host computer 730 and the connected UEs 791, 792 are configured to communicate data and/or signaling via the OTT connection 750, using the access network 711, the core network 714, any intermediate network 720 and possible further infrastructure (not shown) as intermediaries. The OTT connection 750 may be transparent in the sense that the participating communication devices through which the OTT connection 750 passes are unaware of routing of uplink and downlink communications. For example, the base station 712 may not or need not be informed about the past routing of an incoming downlink communication with data originating from the host computer 730 to be forwarded (e.g., handed over) to a connected UE 791. Similarly, the base station 712 need not be aware of the future routing of an outgoing uplink communication originating from the UE 791 towards the host computer 730.

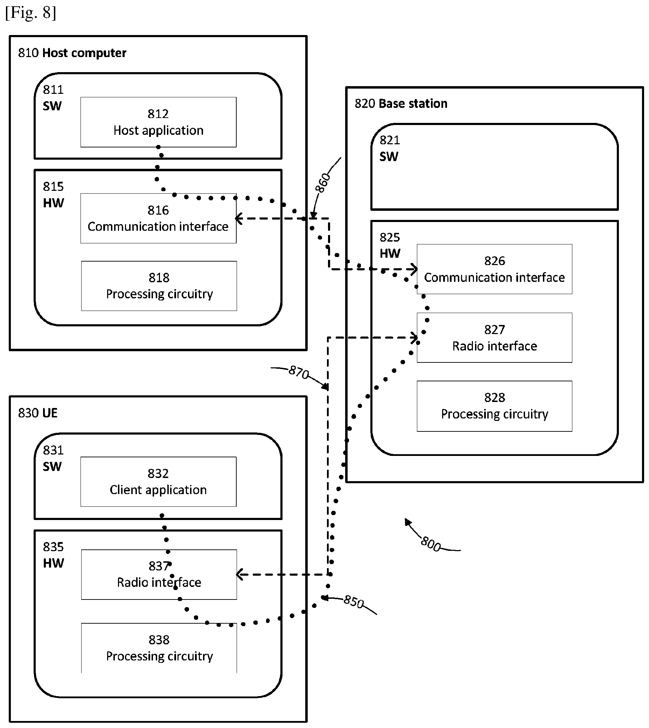

Fig.8 is a block diagram illustrating a host computer communicating via a base station with a UE over a partially wireless connection in accordance with some embodiments of the present disclosure.

Example implementations, in accordance with an embodiment, of the UE, base station and host computer discussed in the preceding paragraphs will now be described with reference to Fig.8. In a communication system 800, a host computer 810 comprises hardware 815 including a communication interface 816 configured to set up and maintain a wired or wireless connection with an interface of a different communication device of the communication system 800. The host computer 810 further comprises a processing circuitry 818, which may have storage and/or processing capabilities. In particular, the processing circuitry 818 may comprise one or more programmable processors, application-specific integrated circuits, field programmable gate arrays or combinations of these (not shown) adapted to execute instructions. The host computer 810 further comprises software 811, which is stored in or accessible by the host computer 810 and executable by the processing circuitry 818. The software 811 includes a host application 812. The host application 812 may be operable to provide a service to a remote user, such as UE 830 connecting via an OTT connection 850 terminating at the UE 830 and the host computer 810. In providing the service to the remote user, the host application 812 may provide user data which is transmitted using the OTT connection 850.

The communication system 800 further includes a base station 820 provided in a telecommunication system and comprising hardware 825 enabling it to communicate with the host computer 810 and with the UE 830. The hardware 825 may include a communication interface 826 for setting up and maintaining a wired or wireless connection with an interface of a different communication device of the communication system 800, as well as a radio interface 827 for setting up and maintaining at least a wireless connection 870 with the UE 830 located in a coverage area (not shown in Fig.8) served by the base station 820. The communication interface 826 may be configured to facilitate a connection 860 to the host computer 810. The connection 860 may be direct or it may pass through a core network (not shown in Fig.8) of the telecommunication system and/or through one or more intermediate networks outside the telecommunication system. In the embodiment shown, the hardware 825 of the base station 820 further includes a processing circuitry 828, which may comprise one or more programmable processors, application-specific integrated circuits, field programmable gate arrays or combinations of these (not shown) adapted to execute instructions. The base station 820 further has software 821 stored internally or accessible via an external connection.

The communication system 800 further includes the UE 830 already referred to. Its hardware 835 may include a radio interface 837 configured to set up and maintain a wireless connection 870 with a base station serving a coverage area in which the UE 830 is currently located. The hardware 835 of the UE 830 further includes a processing circuitry 838, which may comprise one or more programmable processors, application-specific integrated circuits, field programmable gate arrays or combinations of these (not shown) adapted to execute instructions. The UE 830 further comprises software 831, which is stored in or accessible by the UE 830 and executable by the processing circuitry 838. The software 831 includes a client application 832. The client application 832 may be operable to provide a service to a human or non-human user via the UE 830, with the support of the host computer 810. In the host computer 810, an executing host application 812 may communicate with the executing client application 832 via the OTT connection 850 terminating at the UE 830 and the host computer 810. In providing the service to the user, the client application 832 may receive request data from the host application 812 and provide user data in response to the request data. The OTT connection 850 may transfer both the request data and the user data. The client application 832 may interact with the user to generate the user data that it provides.

It is noted that the host computer 810, the base station 820 and the UE 830 illustrated in Fig.8 may be similar or identical to the host computer 730, one of base stations 712a, 712b. 712c and one of UEs 791, 792 of Fig.7, respectively. This is to say, the inner workings of these entities may be as shown in Fig.8 and independently, the surrounding network topology may be that of Fig.7.

In Fig.8, the OTT connection 850 has been drawn abstractly to illustrate the communication between the host computer 810 and the UE 830 via the base station 820, without explicit reference to any intermediary devices and the precise routing of messages via these devices. Network infrastructure may determine the routing, which it may be configured to hide from the UE 830 or from the service provider operating the host computer 810, or both. While the OTT connection 850 is active, the network infrastructure may further take decisions by which it dynamically changes the routing (e.g., on the basis of load balancing consideration or reconfiguration of the network).

Wireless connection 870 between the UE 830 and the base station 820 is in accordance with the teachings of the embodiments described throughout this disclosure. One or more of the various embodiments improve the performance of OTT services provided to the UE 830 using the OTT connection 850, in which the wireless connection 870 forms the last segment. More precisely, the teachings of these embodiments may improve the latency and the power consumption, and thereby provide benefits such as lower complexity, reduced time required to access a cell, better responsiveness, extended battery lifetime, etc.

A measurement procedure may be provided for the purpose of monitoring data rate, latency and other factors on which the one or more embodiments improve. There may further be an optional network functionality for reconfiguring the OTT connection 850 between the host computer 810 and the UE 830, in response to variations in the measurement results. The measurement procedure and/or the network functionality for reconfiguring the OTT connection 850 may be implemented in software 811 and hardware 815 of the host computer 810 or in software 831 and hardware 835 of the UE 830, or both. In embodiments, sensors (not shown) may be deployed in or in association with communication devices through which the OTT connection 850 passes; the sensors may participate in the measurement procedure by supplying values of the monitored quantities exemplified above, or supplying values of other physical quantities from which the software 811, 831 may compute or estimate the monitored quantities. The reconfiguring of the OTT connection 850 may include message format, retransmission settings, preferred routing etc.; the reconfiguring need not affect the base station 820, and it may be unknown or imperceptible to the base station 820. Such procedures and functionalities may be known and practiced in the art. In certain embodiments, measurements may involve proprietary UE signaling facilitating the host computer 810's measurements of throughput, propagation times, latency and the like. The measurements may be implemented in that the software 811 and 831 causes messages to be transmitted, in particular empty or 'dummy' messages, using the OTT connection 850 while it monitors propagation times, errors etc.

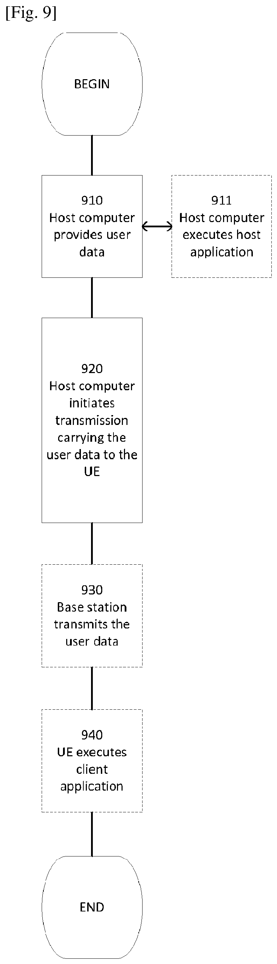

Fig.9 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.9 will be included in this section. In step 910, the host computer provides user data. In substep 911 (which may be optional) of step 910, the host computer provides the user data by executing a host application. In step 920, the host computer initiates a transmission carrying the user data to the UE. In step 930 (which may be optional), the base station transmits to the UE the user data which was carried in the transmission that the host computer initiated, in accordance with the teachings of the embodiments described throughout this disclosure. In step 940 (which may also be optional), the UE executes a client application associated with the host application executed by the host computer.

Fig.10 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.10 will be included in this section. In step 1010 of the method, the host computer provides user data. In an optional substep (not shown) the host computer provides the user data by executing a host application. In step 1020, the host computer initiates a transmission carrying the user data to the UE. The transmission may pass via the base station, in accordance with the teachings of the embodiments described throughout this disclosure. In step 1030 (which may be optional), the UE receives the user data carried in the transmission.

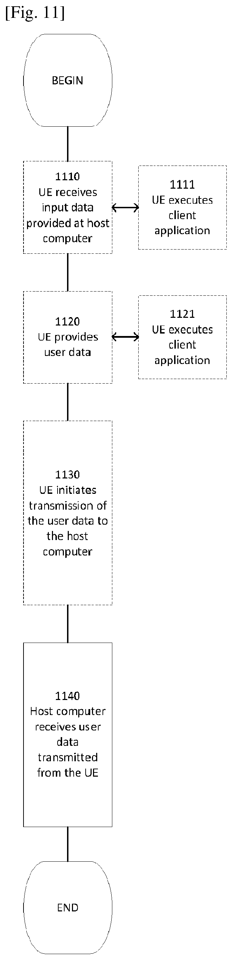

Fig.11 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.11 will be included in this section. In step 1110 (which may be optional), the UE receives input data provided by the host computer. Additionally or alternatively, in step 1120, the UE provides user data. In substep 1121 (which may be optional) of step 1120, the UE provides the user data by executing a client application. In substep 1111 (which may be optional) of step 1110, the UE executes a client application which provides the user data in reaction to the received input data provided by the host computer. In providing the user data, the executed client application may further consider user input received from the user. Regardless of the specific manner in which the user data was provided, the UE initiates, in substep 1130 (which may be optional), transmission of the user data to the host computer. In step 1140 of the method, the host computer receives the user data transmitted from the UE, in accordance with the teachings of the embodiments described throughout this disclosure.

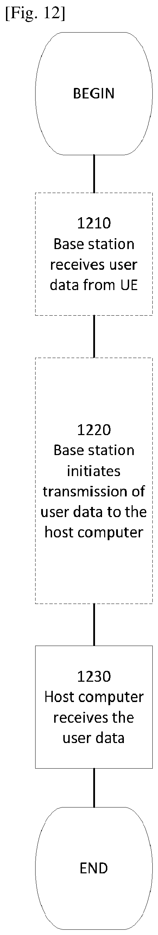

Fig.12 is a flowchart illustrating a method implemented in a communication system, in accordance with an embodiment. The communication system includes a host computer, a base station and a UE which may be those described with reference to Fig.7 and Fig.8. For simplicity of the present disclosure, only drawing references to Fig.12 will be included in this section. In step 1210 (which may be optional), in accordance with the teachings of the embodiments described throughout this disclosure, the base station receives user data from the UE. In step 1220 (which may be optional), the base station initiates transmission of the received user data to the host computer. In step 1230 (which may be optional), the host computer receives the user data carried in the transmission initiated by the base station.

According to some exemplary embodiments, there is provided a method implemented in a communication system which may include a host computer, a base station and a UE. The method may comprise providing user data at the host computer. Optionally, the method may comprise, at the host computer, initiating a transmission carrying the user data to the UE via a cellular network comprising the base station which may perform any step of the exemplary method 510 as describe with respect to Fig.5A or any step of the exemplary method 520 as describe with respect to Fig.5B.

According to some exemplary embodiments, there is provided a communication system including a host computer. The host computer may comprise processing circuitry configured to provide user data, and a communication interface configured to forward the user data to a cellular network for transmission to a UE. The cellular network may comprise a base station having a radio interface and processing circuitry. The base station's processing circuitry may be configured to perform any step of the exemplary method 510 as describe with respect to Fig.5A or any step of the exemplary method 520 as describe with respect to Fig.5B.

According to some exemplary embodiments, there is provided a method implemented in a communication system which may include a host computer, a base station and a UE. The method may comprise, at the host computer, receiving, from the base station, user data origina-ting from a transmission which the base station has received from the UE. The base station may perform any step of the exemplary method 510 as describe with respect to Fig.5A or any step of the exemplary method 520 as describe with respect to Fig.5B.

According to some exemplary embodiments, there is provided a communication system which may include a host computer. The host computer may comprise a communication interface configured to receive user data originating from a transmission from a UE to a base station. The base station may comprise a radio interface and processing circuitry. The base station's processing circuitry may be con-figured to perform any step of the exemplary method 510 as describe with respect to Fig.5A or any step of the exemplary method 520 as describe with respect to Fig.5B.

In general, the various exemplary embodiments may be implemented in hardware or special purpose chips, circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory

(RAM), etc. As will be appreciated by one of skill in the art, the function of the program modules may be combined or distributed as desired in various embodiments. In addition, the function may be embodied in whole or partly in firmware or hardware equivalents such as integrated circuits, field programmable gate arrays (FPGA), and the like.

### Claims

1. A method (510) performed by a master node, comprising

   determining (512) a first configuration for dual connectivity of a terminal device supported by the master node and a first performance evaluation of the first configuration; and
   transmitting (514) a first message to a secondary node, wherein the first message indicates the first configuration and the first performance evaluation;
   receiving a second message from the secondary node, wherein the second message indicates a second configuration for the dual connectivity of the terminal device and a second performance evaluation of the second configuration, and wherein the second configuration is determined by the secondary node based at least in part on the first configuration;
   **characterized in that** the second configuration includes:
   a first carrier aggregation configuration selected from one or more carrier aggregation configurations supported by the master node; and
   a second carrier aggregation configuration selected from one or more carrier aggregation configurations supported by the secondary node;
   wherein the one or more carrier aggregation configurations supported by the secondary node are associated with the one or more carrier aggregation configurations supported by the master node.

2. The method according to claim 1, wherein the first configuration includes one or more carrier aggregation configurations supported by the master node; wherein the first performance evaluation includes one or more throughput evaluations for one or more carrier aggregation configurations supported by the master node.

3. The method according to any of claims 1-2, wherein the first configuration indicates at least one of:

one or more band combinations allowed for the dual connectivity of the terminal device by the master node; and one or more feature sets associated with the one or more band combinations;
wherein the first performance evaluation indicates carrier aggregation throughput evaluated for each of the one or more band combinations and the associated one or more feature sets.

4. The method according to claim 1, wherein the second performance evaluation includes a total throughput evaluation associated with a first throughput evaluation and a second throughput evaluation, and wherein the first throughput evaluation is for a first carrier aggregation configuration supported by the master node, and the second throughput evaluation is for a second carrier aggregation configuration supported by the secondary node;
wherein the second configuration indicates at least one of:

a band combination selected from one or more band combinations which are allowed for the dual connectivity of the terminal device by both the master node and the secondary node; and
a feature set associated with the selected band combination.

5. The method according to claim 4, wherein the second performance evaluation indicates total carrier aggregation throughput associated with a first carrier aggregation throughput and a second carrier aggregation throughput, and wherein the first carrier aggregation throughput is evaluated by the master node for the selected band combination and the associated feature set, and the second carrier aggregation throughput is evaluated by the secondary node for the selected band combination and the associated feature set.

6. The method according to claim 4 or 5, wherein the selected band combination and the associated feature set have highest total carrier aggregation throughput, among the one or more band combinations and associated feature sets which are allowed for the dual connectivity of the terminal device by both the master node and the secondary node.

7. The method according to any of claims 4-6, further comprising:

determining whether to set up the dual connectivity of the terminal device, according to the second message;
determining a third performance evaluation with the dual connectivity of the terminal device being inactive; and
comparing the second performance evaluation with the third performance evaluation.

8. The method according to claim 7, wherein the third performance evaluation includes a throughput evaluation of a current configuration for the terminal device by the master node.

9. The method according to claim 7 or 8, wherein the master node determines to set up the dual connectivity of the terminal device, when a result of the comparison meets a predetermined criterion.

10. The method according to any of claims 7-9 further comprising:
setting up the dual connectivity of the terminal device according to the second configuration, when determining to set up the dual connectivity of the terminal device.

11. The method according to any of claims 1-10, wherein the first message is:

an addition request message for a secondary node of the terminal device; or
a modification request message for the secondary node of the terminal device;
wherein the second message is:

an addition request acknowledge message for a secondary node of the terminal device;
a modification request acknowledge message for the secondary node of the terminal device; or
a modification required message for the secondary node of the terminal device.

12. A master node (610), comprising:

one or more processors (611); and
one or more memories (612) comprising computer program codes (613),

the one or more memories (612) and the computer program codes (613) configured to, with the one or more processors (611), cause the master node (610) at least to perform the method according to any of claims 1-11.

**Patentansprüche**

1. Verfahren (510), das von einem Masterknoten durchgeführt wird, umfassend:

   Bestimmen (512) einer ersten Konfiguration für duale Konnektivität eines Endgeräts unterstützt von dem Masterknoten und einer ersten Leistungsbewertung der ersten Konfiguration; und
   Übertragen (514) einer ersten Nachricht an einen sekundären Knoten, wobei die erste Nachricht die erste Konfiguration und die erste Leistungsbewertung angibt;
   Empfangen einer zweiten Nachricht von dem sekundären Knoten, wobei die zweite Nachricht eine zweite Konfiguration für die duale Konnektivität des Endgeräts und eine zweite Leistungsbewertung der zweiten Konfiguration angibt und wobei die zweite Konfiguration bestimmt wird von dem sekundären Knoten basierend mindestens teilweise auf der ersten Konfiguration;
   **dadurch gekennzeichnet, dass** die zweite Konfiguration Folgendes beinhaltet:

   eine erste Trägeraggregationskonfiguration, die ausgewählt wird aus einer oder mehreren Trägeraggregationskonfigurationen, die von dem Masterknoten unterstützt werden; und
   eine zweite Trägeraggregationskonfiguration, die ausgewählt wird aus einer oder mehreren Trägeraggregationskonfigurationen, die von dem sekundären Knoten unterstützt werden;
   wobei die eine oder die mehreren Trägeraggregationskonfigurationen, die von dem sekundären Knoten unterstützt werden, mit der einen oder den mehreren Trägeraggregationskonfigurationen verbunden sind, die von dem Masterknoten unterstützt werden.

2. Verfahren nach Anspruch 1, wobei die erste Konfiguration eine oder mehrere Trägeraggregationskonfigurationen beinhaltet, die von dem Masterknoten unterstützt werden; wobei die erste Leistungsbewertung eine oder mehrere Durchsatzbewertungen für eine oder mehrere Trägeraggregationskonfigurationen beinhaltet, die von dem Masterknoten unterstützt werden.

3. Verfahren nach einem der Ansprüche 1-2, wobei die erste Konfiguration mindestens eines der Folgenden angibt:

   eine oder mehrere Bandkombinationen, die für die duale Konnektivität des Endgeräts von dem Masterknoten zugelassen sind; und
   einen oder mehrere Funktionsumfänge, die mit der einen oder den mehreren Bandkombinationen verbunden sind;
   wobei die erste Leistungsbewertung einen Trägeraggregationsdurchsatz angibt, der für jede der einen oder der mehreren Bandkombinationen und jeden des verbundenen einen oder der verbundenen mehreren Funktionsumfänge bewertet ist.

4. Verfahren nach Anspruch 1, wobei die zweite Leistungsbewertung eine Gesamt-Durchsatzbewertung in Verbindung mit einer ersten Durchsatzbewertung und einer zweiten Durchsatzbewertung beinhaltet und wobei die erste Durchsatzbewertung für eine erste Trägeraggregationskonfiguration ist, die von dem Masterknoten unterstützt wird, und die zweite Durchsatzbewertung für eine zweite Trägeraggregationskonfiguration ist, die von dem sekundären Knoten unterstützt wird;
   wobei die zweite Konfiguration mindestens eines der Folgenden angibt:

   eine Bandkombination ausgewählt aus einer oder mehreren Bandkombinationen, die für die duale Konnektivität des Endgeräts sowohl von dem Masterknoten als auch von dem sekundären Knoten zugelassen sind; und
   einen Funktionsumfang, der mit der ausgewählten Bandkombination verbunden ist.

5. Verfahren nach Anspruch 4, wobei die zweite Leistungsbewertung einen Gesamt-Trägeraggregationsdurchsatz in Verbindung mit einem ersten Trägeraggregationsdurchsatz und einem zweiten Trägeraggregationsdurchsatz angibt und wobei der erste Trägeraggregationsdurchsatz bewertet wird von dem Masterknoten für die ausgewählte Bandkombination und den verbundenen Funktionsumfang und der zweite Trägeraggregationsdurchsatz bewertet wird von dem sekundären Knoten für die ausgewählte Bandkombination und den verbundenen Funktionsumfang.

6. Verfahren nach Anspruch 4 oder 5, wobei die ausgewählte Bandkombination und der verbundene Funktionsumfang unter den einen oder den mehreren Bandkombinationen und verbundenen Funktionsumfängen, die für die duale Konnektivität des Endgeräts sowohl von dem Masterknoten als auch von dem sekundären Knoten zugelassen sind, den höchsten Gesamt-Trägeraggregationsdurchsatz haben.

7. Verfahren nach einem der Ansprüche 4-6, ferner umfassend:

Bestimmen, ob die duale Konnektivität des Endgeräts einzurichten ist, gemäß der zweiten Nachricht;
Bestimmen einer dritten Leistungsbewertung, wobei die duale Konnektivität des Endgeräts inaktiv ist; und
Vergleichen der zweiten Leistungsbewertung mit der dritten Leistungsbewertung.

8. Verfahren nach Anspruch 7, wobei die dritte Leistungsbewertung eine Durchsatzbewertung einer aktuellen Konfiguration für das Endgerät durch den Masterknoten beinhaltet.

9. Verfahren nach Anspruch 7 oder 8, wobei der Masterknoten bestimmt, dass die duale Konnektivität des Endgeräts einzurichten ist, wenn ein Ergebnis des Vergleichs ein vorbestimmtes Kriterium erfüllt.

10. Verfahren nach einem der Ansprüche 7-9, ferner umfassend:
Einrichten der dualen Konnektivität des Endgeräts gemäß der zweiten Konfiguration, wenn bestimmt wird, dass die duale Konnektivität des Endgeräts einzurichten ist.

11. Verfahren nach einem der Ansprüche 1-10, wobei es sich bei der ersten Nachricht um Folgendes handelt:

eine Ergänzungsanforderungsnachricht für einen sekundären Knoten des Endgeräts; oder
eine Änderungsanforderungsnachricht für den sekundären Knoten des Endgeräts;
wobei es sich bei der zweiten Nachricht um Folgendes handelt:

eine Ergänzungsanforderungs-Bestätigungsnachricht für einen sekundären Knoten des Endgeräts;
eine Änderungsanforderungs-Bestätigungsnachricht für den sekundären Knoten des Endgeräts; oder
eine Nachricht über eine nötige Änderung für den sekundären Knoten des Endgeräts.

12. Masterknoten (610), umfassend:

einen oder mehrere Prozessoren (611); und
einen oder mehrere Speicher (612), die Computerprogrammcodes (613) umfassen, wobei der eine oder die mehreren Speicher (612) und die Computerprogrammcodes (613) dazu konfiguriert sind, mit dem einen oder den mehreren Prozessoren (611) den Masterknoten (610) mindestens zum Durchführen des Verfahren nach einem der Ansprüche 1-11 zu veranlassen.

## Revendications

1. Procédé (510) réalisé par un nœud maître, comprenant

la détermination (512) d'une première configuration pour la double connectivité d'un dispositif terminal pris en charge par le nœud maître et une première évaluation de performance de la première configuration ; et
la transmission (514) d'un premier message à un nœud secondaire, dans lequel le premier message indique la première configuration et la première évaluation de performance ;
la réception d'un second message à partir du nœud secondaire, dans lequel
le second message indiquant une seconde configuration pour la double connectivité du dispositif terminal et une seconde évaluation de performance pour la seconde configuration, et dans lequel la seconde configuration est déterminée par le nœud secondaire sur la base, au moins en partie, de la première configuration ;
**caractérisé en ce que** la seconde configuration comprend :

une première configuration d'agrégation de porteuses sélectionnée parmi une ou plusieurs configurations d'agrégation de porteuses prises en charge par le nœud maître ; et

une seconde configuration d'agrégation de porteuses sélectionnée parmi une ou plusieurs configurations d'agrégation de porteuses prises en charge par le nœud secondaire ;

dans lequel les une ou plusieurs configurations d'agrégation de porteuses prises en charge par le nœud secondaire sont associées aux une ou plusieurs configurations d'agrégation de porteuses prises en charge par le nœud maître.

2. Procédé selon la revendication 1, dans lequel la première configuration comprend une ou plusieurs configurations d'agrégation de porteuses prises en charge par le nœud maître ; dans lequel la première évaluation de performance comprend une ou plusieurs évaluations de débit pour une ou plusieurs configurations d'agrégation de porteuses prises en charge par le nœud maître.

3. Procédé selon l'une quelconque des revendications 1 à 2, dans lequel la première configuration indique au moins l'un des éléments suivants :

une ou plusieurs combinaisons de bandes autorisées pour la double connectivité du dispositif terminal par le nœud maître ; et

un ou plusieurs ensembles de fonctionnalités associés aux une ou plusieurs combinaisons de bandes ;

dans lequel la première évaluation de performance indique le débit d'agrégation de porteuses évalué pour chacune des une ou plusieurs combinaisons de bandes et des un ou plusieurs ensembles de fonctionnalités associés.

4. Procédé selon la revendication 1, dans lequel la seconde évaluation de performance comprend une évaluation de débit total associée à une première évaluation de débit et à une seconde évaluation de débit, et dans lequel la première évaluation de débit est destinée à une première configuration d'agrégation de porteuses prises en charge par le nœud maître, et la seconde évaluation de débit est destinée à une seconde configuration d'agrégation de porteuses prises en charge par le nœud secondaire ;

dans lequel la seconde configuration indique au moins l'un parmi :

une combinaison de bandes sélectionnée parmi une ou plusieurs combinaisons de bandes qui sont autorisées pour la double connectivité du dispositif terminal à la fois par le nœud maître et le nœud secondaire ; et

un ensemble de fonctionnalités associé à la combinaison de bandes sélectionnée.

5. Procédé selon la revendication 4, dans lequel la seconde évaluation de performance indique le débit total d'agrégation de porteuses associé à un premier débit d'agrégation de porteuses et à un second débit d'agrégation de porteuses, et dans lequel le premier débit d'agrégation de porteuses est évalué par le nœud maître pour la combinaison de bandes sélectionnée et l'ensemble de fonctionnalités associé, et le second débit d'agrégation de porteuses est évalué par le nœud secondaire pour la combinaison de bandes sélectionnée et l'ensemble de fonctionnalités associé.

6. Procédé selon la revendication 4 ou 5, dans lequel la combinaison de bandes sélectionnée et l'ensemble de fonctionnalités associé ont le débit d'agrégation de porteuses total le plus élevé, parmi les une ou plusieurs combinaisons de bandes et les ensembles de fonctionnalités associés qui sont autorisés pour la double connectivité du dispositif terminal à la fois par le nœud maître et le nœud secondaire.

7. Procédé selon l'une quelconque des revendications 4 à 6, comprenant en outre :

la détermination de l'opportunité de configurer la double connectivité du dispositif terminal, selon le second message ;

la détermination d'une troisième évaluation de performance avec la double connectivité du dispositif terminal étant inactive ; et

la comparaison de la seconde évaluation de performance avec la troisième évaluation de performance.

8. Procédé selon la revendication 7, dans lequel la troisième évaluation de performance comprend une évaluation de débit d'une configuration actuelle pour le dispositif terminal par le nœud maître.

9. Procédé selon la revendication 7 ou 8, dans lequel le nœud maître détermine d'établir la double connectivité du dispositif terminal, lorsqu'un résultat de la comparaison répond à un critère prédéterminé.

10. Procédé selon l'une quelconque des revendications 7 à 9, comprenant en outre :
l'établissement de la double connectivité du dispositif terminal selon la seconde configuration, lors de la détermination de la configuration de la double connectivité du dispositif terminal.

11. Procédé selon l'une quelconque des revendications 1 à 10, dans lequel le premier message est :

un message de demande d'ajout pour un nœud secondaire du dispositif terminal ; ou
un message de demande de modification pour le nœud secondaire du dispositif terminal ;
dans lequel le second message est :

un message d'accusé de réception de demande d'ajout pour un nœud secondaire du dispositif terminal ;
un message d'accusé de réception de demande de modification pour le nœud secondaire du dispositif terminal ; ou
un message de modification requise pour le nœud secondaire du dispositif terminal.

12. Nœud maître (610), comprenant :

un ou plusieurs processeurs (611) ; et
une ou plusieurs mémoires (612) comprenant des codes de programme informatique (613), les une ou plusieurs mémoires (612) et les codes de programme informatique (613) étant configurés pour, avec les un ou plusieurs processeurs (611), amener le nœud maître (610) au moins à réaliser le procédé selon l'une quelconque des revendications 1 à 11.

[Fig. 1A]

EP 4 238 342 B1

| UE | MN | SN | S-GW | MME |

1. SgNB Addition Request

2. SgNB Addition Request Acknowledge

3. RRCConnectionReconfiguration

4. RRCConnectionReconfigurationComplete

5. SgNB Reconfiguration Complete

6. Random Access Procedure

7. SN Status Transfer

8. Data Forwarding

Path Update procedure

9. E-RAB Modification Indication

10. Bearer Modication

11. End Marker Packet

12. E-RAB Modification Confirm

[Fig. 1B]

| UE | MN | SN | UPF | AMF |
|---|---|---|---|---|

1. SN Addition Request

2. SN Addition Request Acknowledge

2a. Xn-U Address Indication

3. RRC reconfiguration message

4. RRC reconfiguration complete message

5. SN Reconfiguration Complete

6. Random Access Procedure

7. SN Status Transfer

8. Data Forwarding

Path Update procedure    9. PDU Session Modification Indication

10. Bearer Modication

11. End Marker Packet

12. PDU Session Modification Confirmation

EP 4 238 342 B1

[Fig. 1C]

[Fig. 1D]

EP 4 238 342 B1

[Fig. 1E]

| UE | MN | SN | S-GW | MME |
|---|---|---|---|---|

1. SgNB Modification Required

For providing of Forwarding addresses, SgNB Security Key

2. SgNB Modification Request

3. SgNB Modification Request Acknowledge

4. RRCConnectionReconfiguration

5. RRCConnectionReconfigurationComplete

6. SgNB Modification Confirm

7. Random Access Procedure

8. SNStatus Transfer

9. Data Forwarding

10. Secondary RAT Data Usage Report

11. Path Update procedure

EP 4 238 342 B1

[Fig. 1F]

UE    MN    SN    UPF    AMF

1. SN Modification Required

2/3. MN initiated SN Modification procedure in some cases

4. RRCConnectionReconfiguration
(Carry SN RRC reconfiguration message)

5. RRCConnectionReconfigurationComplete
(Carry SN RRC reconfiguration complete)

6. SN Modification Confirm
(Carry SN RRC reconfiguration complete)

7. Random Access Procedure

8. SNStatus Transfer

9. Data Forwarding

10. Secondary RAT Data Usage Report

11. PDU Session Path Update procedure

EP 4 238 342 B1

[Fig. 2A]

EP 4 238 342 B1

MN

SN

Start MR-DC setup

A-1. Sort out allowed MR-DC BCs from MR-DC capabilities based on MN configuration

A-2. Evaluate achievable MCG CA throughput of the allowed MR-DC BCs

1. SgNB Addition Request,
1. SgNB Modification Request,
1. SN Addition Request,
or 1. SN Modification Request

B. X2AP or XnAP messages that contain the allowedBC-ListMRDC along with achievable MCG CA throughput of each band combination and feature set

C-1. Sort out MR-DC BCs from the allowedBC-ListMRDC based on SN configuration

C-2. Evaluate total MR-DC CA throughput of the sorted MR-DC BCs and select the highest one

2. SgNB Addition Request Acknowledge,
2. SgNB Modification Request Acknowledge,
1. SgNB Modification Required,
2. SN Addition Request Acknowledge,
2. SN Modification Request Acknowledge,
or 1. SN Modification Required,

D. X2AP or XnAP messages that contain the selectedBandCombination along with achievable MR-DC CA throughput of the selected band combination and feature set

E. Completes MR-DC CA configuration after comparing net gain of MR-DC active

MN-DC Band Combination coordination

[Fig. 2B]

| EN-DC configurations (reported by UE) | | | | | | | | |
|---|---|---|---|---|---|---|---|---|
| Index | EUTRA | | | | | NR | | |
| BC#1 | 1AA | 3A | 5A | 7A | 7A | n78A | | |
| FS#1 | DU | D | D | D | D | Unread | | |
| BC#2 | 1A | 3AA | 5A | 7A | 7A | n78A | | |
| FS#1 | D | DU | D | D | D | Unread | | Filtered out |
| BC#3 | 1A | 3A | 5AA | 7A | 7A | n78A | | |
| FS#1 | D | D | DU | D | D | Unread | | Filtered out |
| BC#4 | 1AA | 3AA | 5AA | 7AA | 7AA | n78A | n257D | |
| FS#1 | - | DU | D | D | D | Unread | Unread | Filtered out |
| FS#2 | D | - | DU | D | D | Unread | Unread | Filtered out |
| FS#3 | D | D | - | DU | D | Unread | Unread | Filtered out |
| FS#4 | D | D | D | - | DU | Unread | Unread | Filtered out |
| FS#5 | DU | D | D | D | - | Unread | Unread | |
| BC#5 | 1AA | 3A | 19A | | | n78C | | |
| FS#1 | DU | D | D | | | Unread | | |
| FS#2 | DU | D | D | | | Unread | | |
| FS#3 | DU | D | D | | | Unread | | |
| BC#6 | 1AA | 3A | 42C | | | n77C | | |
| FS#1 | DU | D | D | | | Unread | | |
| FS#2 | DU | D | D | | | Unread | | |
| BC#7 | 1AA | 42A | | | | n257M | | |
| FS#1 | DU | D | | | | Unread | | |
| BC#8 | 3AA | 42A | | | | n257M | | |
| FS#1 | DU | D | | | | Unread | | Filtered out |

[Fig. 2C]

| EN-DC configurations (filtered by MN) | | | | | | |
|---|---|---|---|---|---|---|
| Index | EUTRA | | | | | NR |
| BC#1 | 1AA | 3A | 5A | 7A | 7A | n78A |
| FS#1 | DU (2L) | D (2L) | D (2L) | D (2L) | D (2L) | Unread |
| BC#4 | 1AA | 3AA | 5AA | 7AA | 7AA | n78A  n257D |
| FS#5 | DU (4L) | D (2L) | D (2L) | D (2L) | - | Unread Unread |
| BC#5 | 1AA | 3A | 19A | | | n78C |
| FS#1 | DU (4L) | D (4L) | D (2L) | | | Unread |
| FS#2 | DU (4L) | D (2L) | D (4L) | | | Unread |
| FS#3 | DU (2L) | D (4L) | D (4L) | | | Unread |
| BC#6 | 1AA | 3A | 42C | | | n77C |
| FS#1 | DU (4L) | D (2L) | D (2L, 2L) | | | Unread |
| FS#2 | DU (2L) | D (4L) | D (2L, 2L) | | | Unread |
| BC#7 | 1AA | 42A | | | | n257M |
| FS#1 | DU (4L) | DU (4L) | | | | Unread |

15 configurations

15 configurations

1 configuration

7 configurations

2 configurations

Find valid SCells

Find possible LTE BCs

Map BC to configuration

⑧ B1{PCell} + B3{S1} + B5{S2, S3} + B7{S4, S5} + B7'{S6}   5CC

⑦ B1{PCell} + B3{S1} + B5{S2, S3} + B7'{S6}

⑥ B1{PCell} + B3{S1} + B5{S2, S3} + B7{S4, S5}   4CC

⑤ B1{PCell} + B3{S1} + B42{S7} + B42"{S8}

3CC

④ B1{PCell} + B3{S1}

③ B1{PCell} + B42"{S8}   2CC

② B1{PCell} + B42{S7}

① B1{PCell}   1CC

[Fig. 2D]

TB size (bits/ms) from TS 36.213

| RB (BW) | 64QAM (I TBS 26) | | | 256QAM (I TBS 33) | | |
|---|---|---|---|---|---|---|
| | 1 layer | 2 layer | 4 layer | 1 layer | 2 layer | 4 layer |
| 100 (20MHz) | 75376 | 146856 | 299856 | 97896 | 195816 | 391656 |
| 75 (15MHz) | 55056 | 110136 | 220296 | 75376 | 149776 | 299856 |
| 50 (10MHz) | 36696 | 73392 | 146856 | 48936 | 97872 | 195816 |
| 25 (5MHz) | 18336 | 36672 | 73344 | 24496 | 48992 | 97984 |
| 15 (3MHz) | 11064 | 22128 | 44256 | 14688 | 29376 | 58752 |

ex) 10MHz, 64QAM, 2x2 MIMO, FDD

73392 x 100% x 1000ms = 73Mbps (round down)

[Fig. 2E]

| BC#6 | 1AA | 3A | 42C | | | | n77C |
|---|---|---|---|---|---|---|---|
| FS#1 | DU (4L) | D (2L) | D (2L, 2L) | | | | |

All cells has 10MHz BW and SA1/SS7 (54%) and SA2/SS7 (74%) are applied to SCells on B42

(5) B1{PCell} + B3{S1} + B42{S7} + B42″{S8}

(73392bits) = 73Mbps     (73392bits, 74%) = 54Mbps

(146856bits) = 146Mbps     (73392bits, 54%) = 39Mbps

146(PCell) + 73(S1) + 39(S7) + 54(S8) = 312(BC6+FS1)

[Fig. 2F]

**EN-DC configurations (filtered/allowed by MN)**

| Index | EUTRA | | | | | NR |
|---|---|---|---|---|---|---|
| | 1AA | 3A | 5A | 7A | 7A | |
| BC#1 | | | | | | |
| FS#1 | DU (2L) | D (2L) | D (2L) | D (2L) | D (2L) | n78A |
| | | | | | | Unread |
| BC#4 | | | | | | |
| FS#5 | DU (2L) | 3AA | 5AA | 7AA | | n78A  n257D |
| | D (2L) | D (2L) | D (2L) | D (2L) | D (2L) | Unread Unread |
| BC#5 | 1AA | 3A | 19A | | | n78C |
| FS#1 | DU (4L) | D (4L) | D (2L) | | | Unread |
| FS#2 | DU (4L) | D (2L) | D (4L) | | | Unread |
| FS#3 | DU (2L) | D (4L) | D (4L) | | | Unread |
| BC#6 | 1AA | 3A | 42C | | | n77C |
| FS#1 | DU (4L) | D (2L) | D (2L, 2L) | | | Unread |
| FS#2 | DU (2L) | D (2L) | D (2L, 2L) | | | Unread |
| BC#7 | 1AA | 42A | | | | n257M |
| FS#1 | DU (4L) | D (4L) | | | | Unread |

*SA1/SS7{S8} and SA2/SS7{S7} are applied to SCells on B42

Band combinations:

8 — B1{PCell} + B3{S1} + B5{S2, S3} + B7{S4, S5} + B7'{S6}
7 — B1{PCell} + B3{S1} + B5{S2, S3} + B7'{S6}
6 — B1{PCell} + B3{S1} + B5{S2, S3} + B7{S4, S5}
4 — B1{PCell} + B3{S1}
5 — B1{PCell} + B3{S1} + B42"{S7} + B42"{S8}
3 — B1{PCell} + B42"{S8}
2 — B1{PCell} + B42"{S7}
1 — B1{PCell}

**EN-DC configurations (allowed by MN)**

| Index | EUTRA | | | | | TP | Peak TP |
|---|---|---|---|---|---|---|---|
| | 1AA | 3A | 5A | 7A | 7A | | |
| BC#1 | | | | | | | |
| FS#1 | 73 | 73 | 73 | 73 | 73 | 365 | 365 |
| BC#4 | | | | | | | |
| FS#5 | 146 | 3AA | 5AA | 7AA | 7AA | 365 | 365 |
| | 146 | 73 | 73 | 73 | - | 365 | |
| BC#5 | 1AA | 3A | 19A | | | 365 | 365 |
| FS#1 | 146 | 146 | - | | | 292 | 292 |
| FS#2 | 146 | 73 | - | | | 219 | 219 |
| FS#3 | 73 | 146 | - | | | 219 | 219 |
| BC#6 | 1AA | 3A | 42C | | | | |
| FS#1 | 146 | 73 | 39 | 54 | | 312 | 312 |
| FS#2 | 73 | 146 | 39 | 54 | | 312 | 312 |
| BC#7 | 1AA | 42A | | | | | |
| FS#1 | 146 | 79 | | | | 225 | 254 |
| | 146 | 108 | | | | 254 | |

[Fig. 2G]

EP 4 238 342 B1

```
BandCombinationInfo  : :=              SEQUENCE {
        bandCombinationIndex              BandCombinationIndex,
        allowedFeatureSetsList            SEQUENCE  (SIZE  (1..maxFeatureSetsPerBand)) OF FeatureSetEntryIndex
        (new)allowedFeatureSetsDataRateList            SEQUENCE  (SIZE  (1..maxFeatureSetsPerBand)) OF
FeatureSetEntryDataRate

}

FeatureSetEntryIndex  : :=              INTEGER  (1.. maxFeatureSetsPerBand)
(new) FeatureSetEntryDataRate  : :=            INTEGER (1.. 65536)
```

[Fig. 2H]

| | MRDC band combinations | | achievableTotalThroughput |
|---|---|---|---|
| Index | Band combination  part of MCG | Band combination  part of SCG | |
| BC#1 | Band A    Band B    Band C    Band D    Band E | Band nA | |
| FS#1 | Achievable CA throughput of MCG: 1400Mbps | Achievable CA throughput of SCG: 300Mbps | 1700Mbps |
| BC#4 | Band A    Band B    Band C    Band D    Band E | Band nA              Band nB | |
| FS#5 | Achievable CA throughput of MCG: 1200Mbps | Achievable CA throughput of SCG: 800Mbps | 2000Mbps |
| BC#5 | Band A    Band B    Band F | Band nC | |
| FS#1 | Achievable CA throughput of MCG: 1100Mbps | Achievable CA throughput of SCG: 1000Mbps | 2100Mbps |
| FS#2 | Achievable CA throughput of MCG: 1200Mbps | Achievable CA throughput of SCG: 1000Mbps | 2200Mbps |
| FS#3 | Achievable CA throughput of MCG: 1300Mbps | Achievable CA throughput of SCG: 1000Mbps | 2300Mbps |
| BC#6 | Band A    Band B    Band G | Band nA | |
| FS#1 | Achievable CA throughput of MCG: 800Mbps | Achievable CA throughput of SCG: 1200Mbps | 2000Mbps |
| FS#2 | Achievable CA throughput of MCG: 800Mbps | Achievable CA throughput of SCG: 1300Mbps | 2100Mbps |
| BC#7 | Band A    Band H | Band nD | |
| FS#1 | Achievable CA throughput of MCG: 300Mbps | Achievable CA throughput of SCG: 1500Mbps | 1800Mbps |

EP 4 238 342 B1

[Fig. 2I]

```
BandCombinationInfo : :=          SEQUENCE {
        bandCombinationIndex              BandCombinationIndex,
        requestedFeatureSets              FeatureSetEntryIndex
        (new)achievableTotalThroughput        achievableTotalThroughput
}

(new) featureSetachievablethrouhgput : :=      INTEGER (1.. 65536)
```

[Fig. 2J]

| Index | selectedBandCombination | | | | | | Throughput | |
| | Band combination part of MCG | | | | | Band combination part of SCG | achievableTotalThroughput | Net gain (MCG throughput with MR-DC inactive is 2000Mbps) |
| | Band A | Band B | Band C | Band D | Band E | Band nA | | |
| BC#1 | | | | | | | | |
| FS#1 | Achievable CA throughput of MCG: 1400Mbps | | | | | Achievable CA throughput of SCG: 300Mbps | 1700Mbps | -300Mbps |

[Fig. 2K]

| selectedBandCombination | | | | | | | Throughput | |
|---|---|---|---|---|---|---|---|---|
| Index | Band combination part of MCG | | | | | Band combination part of SCG | achievableTotalThroughput | Net gain (MCG throughput with MR-DC inactive is 2000Mbps) |
| BC#4 | Band A | Band B | Band C | Band D | Band E | Band nA    Band nB | | |
| FS#5 | Achievable CA throughput of MCG: 1200Mbps | | | | | Achievable CA throughput of SCG: 800Mbps | 2000Mbps | 0Mbps |

44

| | selectedBandCombination | | | Throughput | |
|---|---|---|---|---|---|
| Index | Band combination part of MCG | | Band combination part of SCG | achievableTotalThroughput | Net gain (MCG throughput with MR-DC inactive is 2000Mbps) |
| BC#5 | Band A    Band B    Band F | | Band nC | | |
| FS#3 | Achievable CA throughput of MCG: 1300Mbps | | Achievable CA throughput of SCG: 1000Mbps | 2300Mbps | 300Mbps |

[Fig. 3]

| Master Node | | Secondary Node |
| --- | --- | --- |

**allowedBC-ListMRDC** is sent over:
X2AP: SgNB Addition Request,
X2AP: SgNB Modification Request,
XnAP: SN Addition Request,
or XnAP: SN Modification Request

**selectedBandCombination** is sent over:
X2AP: SgNB Addition Request Acknowledge,
X2AP: SgNB Modification Request Acknowledge,
X2AP: SgNB Modification Required,
XnAP: SN Addition Request Acknowledge,
XnAP: SN Modification Request Acknowledge,
or XnAP: SN Modification Required,

[Fig. 4]

[Fig. 5A]

<u>510</u>

| Determine a first configuration for dual connectivity of a terminal device supported by the first network node and a first performance evaluation of the first configuration | 512 |

| Transmit a first message to a second network node | 514 |

[Fig. 5B]

<u>520</u>

| Receive a first message from a first network node | 522 |

| Determine a second configuration for the dual connectivity of the terminal device and a second performance evaluation of the second configuration | 524 |

[Fig. 6A]

610

APPARATUS

611    612

PROCESSOR ◄──► MEMORY

613

[Fig. 6B]

620

APPARATUS

621    622

Determining
Unit

Transmitting
Unit

[Fig. 6C]

630

APPARATUS

631    632

Receiving
Unit

Determining
Unit

[Fig. 7]

[Fig. 8]

**810 Host computer**

**811 SW**

812
Host application

**815 HW**

816
Communication interface

818
Processing circuitry

**820 Base station**

**821 SW**

**825 HW**

826
Communication interface

827
Radio interface

828
Processing circuitry

*860*

*870*

*800*

**830 UE**

**831 SW**

832
Client application

**835 HW**

837
Radio interface

838
Processing circuitry

*850*

[Fig. 9]

```
        ┌─────────────┐
        │             │
        │    BEGIN    │
        │             │
        └──────┬──────┘
               │
    ┌──────────┴──────────┐        ┌─────────────────────┐
    │        910          │        │        911          │
    │   Host computer     │◄──────►│   Host computer     │
    │   provides user     │        │   executes host     │
    │       data          │        │    application      │
    └──────────┬──────────┘        └─────────────────────┘
               │
    ┌──────────┴──────────┐
    │        920          │
    │   Host computer     │
    │     initiates       │
    │    transmission     │
    │    carrying the     │
    │  user data to the   │
    │        UE           │
    └──────────┬──────────┘
               │
    ┌──────────┴──────────┐
    │        930          │
    │   Base station      │
    │   transmits the     │
    │     user data       │
    └──────────┬──────────┘
               │
    ┌──────────┴──────────┐
    │        940          │
    │   UE executes       │
    │      client         │
    │    application      │
    └──────────┬──────────┘
               │
        ┌──────┴──────┐
        │             │
        │     END     │
        │             │
        └─────────────┘
```

[Fig. 10]

BEGIN

1010
Host computer
provides user
data

1020
Host computer
initiates
transmission
carrying the
user data to the
UE

1030
UE receives the
user data

END

[Fig. 11]

[Fig. 12]

BEGIN

1210
Base station
receives user
data from UE

1220
Base station
initiates
transmission of
user data to the
host computer

1230
Host computer
receives the
user data

END

**EP 4 238 342 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019246286 A1